# EUROPEAN PATENT APPLICATION

(11) **EP 4 525 522 A1**
(43) Date of publication of application: **19.03.2025**
(21) Application number: 22950671.2
(22) Date of filing: 14.07.2022
(51) Int. Cl.: H04W 36/06

(54) **COMMUNICATION METHOD AND RELATED APPARATUS**

(71) Applicant: Huawei Technologies Co., Ltd., Shenzhen, Guangdong 518129 (CN)
(72) Inventor: GAO, Lei, Shenzhen, Guangdong 518129 (CN); WANG, Jian, Shenzhen, Guangdong 518129 (CN); CHENG, Xingqing, Shenzhen, Guangdong 518129 (CN)
(74) Representative: Huawei European IPR
(86) International application number: PCT/CN2022/105839
(87) International publication number: WO 2024/011550

(57) **Abstract**

A communication method and a related apparatus are disclosed, and are applied to the field of communication technologies. In embodiments of this application, when switching a frequency number, a first node notifies, by using physical layer control signaling indicating frequency number switching, a second node of operating frequency number switching, where the physical layer control signaling indicating frequency number switching is scrambled by using a first identifier to distinguish the physical layer control signaling from physical layer signaling of another function. In the foregoing implementation, an indication of operating frequency number switching is completed by using the first identifier and the physical layer control signaling. This shortens duration of frequency number switching, so that the first node and the second node can switch to a second frequency number as soon as possible to perform communication. This improves transmission performance of a communication network.

## Description

### TECHNICAL FIELD

This application relates to the field of communication technologies, and in particular, to the field of short-range communication technologies, for example, communication in scenarios such as a smart car, a smart home, a smart terminal, and smart manufacturing; and specifically relates to a communication method and a related apparatus.

### BACKGROUND

Various types of interference exist in a wireless communication environment, and some spectra are shared by a plurality of different wireless communication technologies. This requires the wireless communication technologies to have an anti-interference capability. If detecting that interference exists or interference is severe at a current operating frequency number, a node in a wireless communication system may switch the operating frequency number to suppress impact of the interference.

Communication usually occurs between a plurality of nodes. After a node, for example, a first node, determines to switch an operating frequency number, the first node needs to notify another node (for example, at least one second node) communicating with the node of operating frequency number switching, so that the first node and the node communicating with the first node switch from the operating frequency number of current communication to a new operating frequency number to continue communication.

A frequency number switching process has a high time requirement. If duration of the switching process (namely, an interval between time at which it is determined to switch the frequency number to time at which communication starts at the new frequency number that is switched to) is long, data and/or signaling transmission efficiency is low, and transmission performance of an inter-node communication link is affected.

For example, if communication of the first node at a first frequency number is interfered with, when detecting that a second frequency number is idle, the first node determines to switch the operating frequency number to the second frequency number. If the duration of the switching process is long, another node (for example, a third node) may preempt the second frequency number as an operating frequency number. After the first node switches the operating frequency number to the second frequency number, communication of the first node at the second frequency number is still interfered with by the third node, and transmission performance of a communication link is affected.

For another example, if the duration of the switching process is long, the first node needs to continue communication on the interfered frequency number for a long time, resulting in poor transmission performance of a communication link.

### SUMMARY

Embodiments of this application provide a communication method and a related apparatus, to shorten duration of frequency number switching and improve transmission performance of an inter-node communication link.

According to a first aspect, an embodiment of this application provides a communication method. The method includes:

A first node sends higher layer signaling, where the higher layer signaling includes a first identifier; and
the first node sends first physical layer control signaling at an operating frequency number, where some or all information bits in the first physical layer control signaling are scrambled by using the first identifier, and the operating frequency number is a first frequency number; and the first physical layer control signaling indicates switching of the operating frequency number of the first node to a second frequency number.

Optionally, a node receiving the higher layer signaling and the first physical layer control signaling may be a second node. Descriptions are provided below by using an example in which a receiving end is a second node. There may be one or more second nodes. The higher layer signaling includes but is not limited to X resource control (X resource control, XRC) setup signaling, XRC reconfiguration signaling, or a system message.

In this embodiment of this application, the first node notifies the second node of the first identifier in advance by using the higher layer signaling, where the first identifier is used to scramble the physical layer control signaling indicating frequency number switching, so that the physical layer control signaling indicating frequency number switching can be distinguished from signaling of another function, or a function group in which the physical layer control signaling indicating frequency number switching is located can be distinguished from another function group.

After determining frequency number switching, the first node sends the first physical layer control signaling scrambled by using the first identifier, where the first physical layer control signaling indicates switching of the operating frequency number to the second frequency number. If the second node can descramble the first physical layer control signaling by using the first identifier, the second node may obtain a function of the first physical layer control signaling, and obtain data content of the first physical layer control signaling based on a data format of the first physical layer control signaling; and therefore receive an indication of operating frequency number switching.

Indicating operating frequency number switching by using the physical layer signaling can effectively shorten an interval from time at which switching is determined to time a which the signaling takes effect, and shorten duration of switching. The main reasons are as follows: First, the higher layer signaling needs to be scheduled and transmitted by using physical layer signaling, takes effect only after a signaling receiving node is scheduled by using the physical layer signaling to send signaling confirmation, and requires a complex process and long time to take effect, while the physical layer signaling can be directly transmitted, and take effect in a short time after being received by a receiver. Second, a part of higher layer signaling (such as a system message) has one transmission opportunity only in a long period, where the period is generally tens to hundreds of milliseconds, while the physical layer signaling has many transmission opportunities, where there is generally more than one transmission opportunity every millisecond. Therefore, indicating frequency number switching by using the physical layer signaling has a short interval from the time at which the frequency number switching is determined to time at which corresponding signaling may be sent.

In conclusion, in this embodiment of this application, the first identifier is used to scramble the physical layer control signaling indicating frequency number switching, and the first identifier and the physical layer control signaling are used to complete the indication of operating frequency number switching. This shortens the duration of frequency number switching, so that the first node can switch to the second frequency number as soon as possible for communication, improves data and/or signaling transmission efficiency, and improves transmission performance of an inter-node communication link.

In some scenarios, scrambling refers to obtaining a new signal based on an original signal and a scrambling code. A reverse operation of scrambling is descrambling.

Because the first identifier is used in a scrambling process of signaling, a used encoding (or decoding) manner of the first physical layer control signaling may be the same as an encoding (or decoding) manner of other signaling. This setting can further shorten, without increasing decoding time at the receiving end, the time for frequency number switching; and does not significantly increase, when the receiving end needs to additionally blindly detect physical layer signaling for carrier switching, complexity of blindly detecting the physical layer signaling by the receiving end.

In another possible implementation of the first aspect, the first identifier corresponds to a frequency number switching function. In this implementation, after descrambling the first physical layer control signaling by using the first identifier, the second node can distinguish the function of the first physical layer control signaling. This accelerates a speed of obtaining, by the second node, the indication of operating frequency number switching, so that the second node can switch to a new operating frequency number as soon as possible to communicate with the first node, and improve transmission performance of the link.

In still another possible implementation of the first aspect, the first physical layer control signaling includes a function indication field, and the function indication field indicates that the first identifier corresponds to the frequency number switching function. In this implementation, after descrambling the first physical layer control signaling by using the first identifier and obtaining the function indication field, the second node can distinguish the function of the first physical layer control signaling. To be specific, the first identifier may correspond to a group of signaling function types (including one or more signaling function types), and signaling functions in the group of signaling function types may be distinguished by using function indication fields in signaling. This improves flexibility and extensibility of the first identifier.

In still another possible implementation of the first aspect, the some information bits in the first physical layer control signaling include a cyclic redundancy check CRC code of the first physical layer control signaling. In this implementation, the CRC code of the first physical layer control signaling is scrambled by using the first identifier to distinguish from the physical layer signaling of another function. This implementation can be used to further shorten, without increasing decoding time of the second node, duration of frequency number switching.

In still another possible implementation of the first aspect, a resource for sending the first physical layer control signaling belongs to a pre-configured physical layer control signaling common resource.

A physical layer control signaling common resource (a common resource for short) is a resource that can be shared by a plurality of second nodes for detecting physical layer control signaling, and includes but is not limited to a time-frequency resource. The second node detects (or listens to) the signaling on the common resource, so that a node for which the common resource is configured can receive the first physical layer control signaling. Therefore, the first node does not need to notify other nodes one by one of frequency number switching. This shortens duration of frequency number switching.

In consideration of a possible case, there may be a plurality of second nodes. For example, in a SparkLink basic (SparkLink Basic, SLB) technology, one communication domain may include a maximum of 4096 second nodes. In this case, it is time-consuming for the first node to notify the second nodes one by one of operating frequency number switching. Due to time-consuming notifications, the first node cannot switch to a new operating frequency number as soon as possible, and the second nodes cannot obtain the frequency number switching indications in time. As a result, transmission performance of a communication link between nodes is poor.

In the foregoing implementation, the first node sends the first physical layer control signaling on the common resource, and at least one second node blindly detects physical layer control signaling in the common resource for transmitting physical layer control signaling, so as to obtain the frequency number switching indication. This greatly shortens duration of notifying frequency number switching, so that the second node can switch to the second frequency number as soon as possible to communicate with the first frequency number, and improves transmission performance.

In still another possible implementation of the first aspect, the method further includes: The first node communicates with at least one second node at the second frequency number. Optionally, the operation is performed after the first physical layer control signaling is sent.

In still another possible implementation of the first aspect, superframe sequence numbers of a first superframe and a second superframe are consecutive; and the first superframe is a last superframe for transmitting data and/or signaling at the first frequency number before the operating frequency number of the first node is switched from the first frequency number to the second frequency number, and the second superframe is a first superframe for transmitting data and/or signaling at the second frequency number after the operating frequency number of the first node is switched from the first frequency number to the second frequency number.

That is, before and after operating frequency number switching, superframe sequence numbers of superframes are consecutive. The foregoing implementation can ensure that transmission is logically consecutive. Scheduling before operating frequency number switching can continue to be used after switching, without reconfiguration or rescheduling. This greatly reduces impact of operating frequency number switching on a communication process, and improves transmission performance.

A configuration includes a configuration of a time-frequency resource, for example, a resource reserved for transmission data/signaling. Scheduling includes allocation of a resource. For example, a first node sends scheduling signaling in an N^{th} superframe, and scheduling indicated by the scheduling signaling takes effect in an (N+1)^{th} superframe. If superframe numbers are consecutive, scheduling signaling sent in a superframe before operating frequency number switching may continue to take effect in a superframe after frequency number switching, and scheduling signaling does not need to be sent again.

In still another possible implementation of the first aspect, an interval between an end moment of the first superframe and a start moment of the second superframe is N milliseconds, N is an integer, and N≥0.

Optionally, a length of a superframe is 1 ms, and a period of a synchronization signal is 1 ms. Further, a location of the synchronization signal is usually at a fixed time location in the superframe, so that the period of the synchronization signal is the same as the length of the superframe.

An interval between an end moment of a last superframe used by the first node for transmission at the operating frequency number and a start moment of a first superframe for transmission at a destination frequency is 0 or a positive integer number of milliseconds, so that a superframe boundary and a location of a synchronization signal do not change in an operating frequency number switching process. This reduces changes of configuration parameters, and has simpler implementation of timing synchronization between the first node and the second node.

In still another possible implementation of the first aspect, the first physical layer control signaling includes one or more of the following information: an identifier of the second frequency number, a superframe sequence number continuity indication, an indication of a frequency number switching moment, a re-access indication, a switching interval indication, or a preamble indication.

In still another possible implementation of the first aspect, the first physical layer control signaling includes the identifier of the second frequency number. The identifier of the second frequency number indicates a destination frequency number for switching, and includes but is not limited to a frequency number sequence number, a frequency number index number, or a channel number.

In still another possible implementation of the first aspect, the first physical layer control signaling includes the superframe sequence number continuity indication, and the superframe sequence number continuity indication indicates whether it is ensured that superframe sequence numbers of a first superframe and a second superframe are consecutive.

The superframe sequence number continuity indication can indicate the second node impact of operating frequency number switching on superframe sequence numbers and scheduling, so that the second node performs corresponding configuration. This improves transmission performance of the communication link.

In a possible design, when being a sixth value, the superframe continuity indication indicates that it is not ensured that a superframe sequence number of a last superframe before operating frequency number switching and a superframe sequence number of a first superframe after operating frequency number switching are consecutive. In this case, scheduling performed before operating frequency number switching is invalid at the second frequency number, and the first node needs to determine scheduling again.

In a possible design, when being a seventh value, the superframe continuity indication indicates that a superframe sequence number of a last superframe before operating frequency number switching and a superframe sequence number of a first superframe after operating frequency number switching are consecutive. In this case, scheduling performed before operating frequency number switching is valid at the second frequency number, and rescheduling is not required. This shortens duration of switching.

In still another possible implementation of the first aspect, the first physical layer control signaling includes the indication of the frequency number switching moment. The indication of the switching moment indicates an occasion for switching the operating frequency number.

In a possible manner, the indication of the frequency number switching moment indicates an occasion on which the first node starts to switch the operating frequency number, for example, indicates a superframe sequence number of a last superframe used by the first node for transmission at the current operating frequency number, or indicates an offset of a last superframe used by the first node for transmission at the current operating frequency number relative to a superframe for sending the first physical layer control signaling.

In another possible manner, the indication of the frequency number switching moment indicates a start moment at which transmission starts at the second frequency number, for example, indicates a superframe sequence number of a first superframe used by the first node for transmission at the second frequency number, or indicates an offset of a start moment of a first superframe used by the first node for transmission at the second frequency number relative to a start moment of a superframe for sending the first physical layer control signaling.

Optionally, the offset in the foregoing manner may be in a unit of a superframe, in a unit of a millisecond (ms), or in a unit of a microsecond (µs).

In still another possible implementation of the first aspect, the second node can determine, based on the frequency number switching moment, the occasion for switching the operating frequency number.

In still another possible implementation of the first aspect, the first physical layer control signaling includes the re-access indication. The re-access indication is indication information indicating whether the second node needs to perform re-access.

In the frequency number switching process, the second node needs to perform the re-access operation in some cases or the second node does not need to perform the re-access operation in some cases. The re-access indication is carried in the first physical layer control signaling to flexibly regulate and control behavior of the second node. This can improve flexibility and stability of a communication system.

In some possible cases, the re-access indication indicates the second node not to perform the re-access operation. For example, a communication domain system configuration is not changed or changed as little as possible or only a communication domain system configuration (for example, a random access resource pool configuration or a channel sounding reference signal resource pool configuration) that does not affect scheduling of current transmission is changed during frequency number switching. This avoids re-access of the second node, reduces extra time consumption caused by re-access, and avoids invalidation of current scheduling. This setting can reduce service interruption caused by frequency number switching and improve transmission performance.

In some possible cases, the first node may adjust a communication system parameter, for example, a cyclic prefix (Cyclic Prefix, CP) length and a resource ratio, based on a channel status of the second frequency number and/or a current service requirement. If the second node re-accesses the first node, it is easier for a change of the communication parameter to take effect, and the first node may indicate the second node to perform re-access. This improves stability of communication between the second node and the first node.

In still another possible implementation of the first aspect, when being a first value, the re-access indication indicates the second node to perform an access operation at the second frequency number. For example, the access operation includes sending an access request.

An access manner may be contention access, contention-free access, or the like.

In still another possible implementation of the first aspect, when being a second value, the re-access indication indicates the second node to maintain a current access state or not to perform an access operation.

In still another possible implementation of the first aspect, the first physical layer control signaling includes the switching interval indication, and the switching interval indication indicates a time interval between a last superframe (namely, a first superframe) for transmission at the first frequency number and a first superframe (namely, a second superframe) for transmission at the second frequency number. A switching interval between superframes can be flexibly configured by using the switching interval indication. This meets requirements of devices having different frequency number switching capabilities.

Optionally, the switching interval indication may include one or more of the following time intervals: a time interval between an end moment of the first superframe and a start moment of the second superframe, a time interval between a start moment of the first superframe and the start moment of the second superframe, a time interval between the end moment of the first superframe and an end moment of the second superframe, a time interval between a synchronization signal in the first superframe and a synchronization signal in the second superframe, and the like.

In a possible implementation, when the first node sends preamble information at the second frequency number, the switching interval may include one or more of the following: a time interval between an end moment of the first superframe and a start moment of the preamble information, a time interval between a start moment of the first superframe and the start moment of the preamble information, and the like.

In still another possible implementation of the first aspect, the second node can change a communication configuration based on the switching interval indication, to improve communication stability. For example, the second node may determine, based on a time interval, time for starting transmission in a superframe after switching, a location of a synchronization signal, and the like.

In still another possible implementation of the first aspect, the switching interval indication further indicates whether the first node sends preamble information at the second frequency number.

Further, if the switching interval indicates that the first node sends the preamble information at the second frequency number, the second node correspondingly receives the preamble information at the second frequency number; or if the switching interval indicates that the first node does not send the preamble information at the second frequency number, the second node does not need to receive the preamble information at the second frequency number. It can be learned that the switching interval indication can be used to flexibly regulate and control behavior of the second node. This can improve stability of a communication system.

The preamble information is a segment of information sent first before sending is performed in a superframe at the second frequency number after frequency number switching. Optionally, the preamble information may indicate a change of configuration information, for example, indicate a change of information such as a random access resource pool configuration and a channel sounding reference signal (Sounding Reference Signal, SRS) resource pool configuration.

Optionally, the preamble information may be used by a receiving node to synchronize and obtain channel information, for example, used for channel estimation and channel quality evaluation. That is, the second node may perform synchronization based on the preamble information, and/or obtain channel information based on the preamble information.

In some possible implementations, content of the preamble information may be predefined or pre-configured.

In still another possible implementation of the first aspect, the first node does not send preamble information at the second frequency number. This shortens an interval between a last superframe before switching and a first superframe after switching, and reduces switching time consumed.

In still another possible implementation of the first aspect, the method further includes:

When the switching interval indication is greater than a third value, the first node sends preamble information at the second frequency number.

Optionally, when the switching interval indication is less than a third value, the first node does not send preamble information at the second frequency number.

It should be understood that when the switching interval is equal to a third value, the first node may not send preamble information at the second frequency number or not send preamble information.

In a possible design, if the switching interval indication is greater than, or greater than or equal to a third value, the first node sends preamble information at the second frequency number; or if the switching interval indication is less than the third value, the first node does not send preamble information at the second frequency number.

In another possible design, if the switching interval indication is greater than a third value, the first node sends preamble information at the second frequency number; or if the switching interval indication is less than, or less than or equal to a third value, the first node does not send preamble information at the second frequency number.

In still another possible implementation of the first aspect, when the switching interval indication is 0, the first node does not send preamble information at the second frequency number; or when the switching interval indication is a value greater than 0, the first node sends preamble information at the second frequency number.

In still another possible implementation of the first aspect, the first physical layer control signaling includes the preamble indication, and the preamble indication indicates that the first node sends the preamble information at the second frequency number, or indicates that the first node does not send the preamble information at the second frequency number. The preamble indication can be used to flexibly regulate and control behavior of the second node. This can improve stability of a communication system.

Optionally, when the preamble indication is a fourth value, the first node sends the preamble information at the second frequency number.

Optionally, when the preamble indication is a fifth value, the first node does not send the preamble information at the second frequency number.

In still another possible implementation of the first aspect, when the switching interval indicates whether the preamble information is sent, the first physical layer control signaling does not need to carry an additional preamble indication, to reduce fields in the physical layer control signaling.

In still another possible implementation of the first aspect, the first identifier may be used in a plurality of frequency number switching processes. That is, after the first node sends the first identifier to the second node, in subsequent plurality of operating frequency number switching processes, physical layer control signaling indicating frequency number switching may be scrambled by using the same first identifier. After the first identifier is configured by using the higher layer signaling, frequency number switching may be indicated by using one time of physical layer control signaling. This further reduces signaling interaction in the frequency number switching process, further shortens duration of frequency number switching, so that the first node can switch to the second frequency number for communication as soon as possible, and improves transmission performance of a communication network.

In still another possible implementation of the first aspect, the method further includes:

The first node sends second physical layer control signaling at an operating frequency number, where the second physical layer control signaling indicates switching of the operating frequency number to a third frequency number, some or all information bits in the second physical layer control signaling are scrambled by using the first identifier, and the operating frequency number is the second frequency number.

In the foregoing implementation, when switching the operating frequency number to the third frequency number, the first node may indicate, by using one time of physical layer control signaling, frequency number switching. This shortens duration of frequency number switching, and improves transmission performance of the communication network.

In still another possible implementation of the first aspect, the method further includes:

The first node receives frequency number capability information of the at least one second node, where the frequency number capability information includes one or more of a supported frequency number, a supported switching interval, and the like.

Optionally, the second frequency number belongs to a frequency number supported by the second frequency number.

In still another possible implementation of the first aspect, the method further includes:

The first node may determine a switching interval based on the frequency number capability information reported by the at least one second node. In this way, the first node may flexibly configure a switching interval, so that the switching interval can match switching capabilities of the first node and the second node, shorten the switching interval as much as possible, and reduce an extra delay caused by frequency number switching.

In still another possible implementation of the first aspect, the first physical layer control signaling is sent in a broadcast and/or multicast manner.

In this implementation, the first node may notify, through broadcast or multicast once, the at least one second node of frequency number switching, and does not need to notify the at least one second node one by one. This greatly shortens duration of notifying frequency number switching, so that the second node switches to the second frequency number as soon as possible to communicate with the first frequency number, and improves transmission performance.

In still another possible implementation of the first aspect, the second node does not send feedback indicating whether the first physical layer control signaling is successfully detected. Reducing signaling interaction can further shorten duration of frequency time switching.

In still another possible implementation of the first aspect, the first node separately sends a plurality of times of physical layer control signaling in a plurality of superframes to indicate same frequency number switching. The first node repeatedly sends, for a plurality of times, signaling indicating same frequency number switching, so that the second node has an opportunity to detect the signaling for a plurality of times. This reduces a probability of a frequency number switching failure because the second node does not detect the signaling.

In still another possible implementation of the first aspect, that the first node sends first physical layer control signaling at an operating frequency number includes: The first node sends the first physical layer control signaling in a third superframe at an operating frequency number, where the operating frequency number is the first frequency number.

The method further includes: The first node sends third physical layer control signaling in a fourth superframe at an operating frequency number, where some or all information bits in the third physical layer control signaling are scrambled by using the first identifier, the operating frequency number is the first frequency number, and the third physical layer control signaling indicates switching of the operating frequency number of the first node to the second frequency number.

It can be learned that both the first physical layer control signaling and the third physical layer control signaling are scrambled by using the first identifier, and indicate switching of the operating frequency number to the second frequency number. Correspondingly, the second node can obtain the frequency number switching indication as long as detecting either of the first physical layer control signaling and the third physical layer control signaling. Therefore, the foregoing implementation can be used to reduce the probability of the frequency number switching failure because the second node does not detect the signaling, and improve transmission performance.

In still another possible implementation of the first aspect, the first physical layer control signaling belongs to one of a plurality of pieces of physical layer control signaling, the plurality of pieces of physical layer control signaling further include fourth physical layer control signaling, and a length of the first physical layer control signaling is the same as a bit length of the fourth physical layer control signaling. A function of the first physical layer control signaling is different from a function of the fourth physical layer control signaling.

In the foregoing implementation, a bit length of the first physical layer control signaling is the same as a length of another type of physical layer control signaling indicating another function. In other words, a bit length of the first physical layer control signaling belongs to an existing bit length. Not adding a new bit length can reduce time for decoding signaling during blind detection of the second node, and shorten duration of frequency number switching.

According to a second aspect, an embodiment of this application provides a communication method. The method includes:

A second node receives higher layer signaling from a first node, where the higher layer signaling includes a first identifier; and
the second node receives first physical layer control signaling at an operating frequency number, where some or all information bits in the first physical layer control signaling are scrambled by using the first identifier, and the operating frequency number is a first frequency number; and
the first physical layer control signaling indicates switching of an operating frequency number of the first node to a second frequency number.

In another possible implementation of the second aspect, the first identifier corresponds to a frequency number switching function.

In still another possible implementation of the second aspect, the first physical layer control signaling includes a function indication field, and the function indication field indicates that the first identifier corresponds to the frequency number switching function.

In still another possible implementation of the second aspect, the some information bits in the first physical layer control signaling include a cyclic redundancy check CRC code of the first physical layer control signaling.

In still another possible implementation of the second aspect, a resource for sending the first physical layer control signaling belongs to a pre-configured physical layer control signaling common resource.

In still another possible implementation of the second aspect, the method further includes:

The second node descrambles the some or all information bits in the first physical layer control signaling by using the first identifier; and
the second node communicates with the first node at the second frequency number.

It should be understood that, when all the information bits in the first physical layer control signaling are scrambled by using the first identifier, the second node descrambles all the information bits in the first physical layer control signaling by using the first identifier.

When the some information bits in the first physical layer control signaling are scrambled by using the first identifier, the second node descrambles the some information bits in the first physical layer control signaling by using the first identifier.

In still another possible implementation of the second aspect, superframe sequence numbers of a first superframe and a second superframe are consecutive; and the first superframe is a last superframe for transmitting data and/or signaling at the first frequency number before the operating frequency number of the first node is switched from the first frequency number to the second frequency number, and the second superframe is a first superframe for transmitting data and/or signaling at the second frequency number after the operating frequency number of the first node is switched from the first frequency number to the second frequency number.

That is, before and after operating frequency number switching, superframe sequence numbers of superframes are consecutive.

In still another possible implementation of the second aspect, an interval between an end moment of the first superframe and a start moment of the second superframe is N milliseconds, N is an integer, and N≥0.

In still another possible implementation of the second aspect, the first physical layer control signaling includes one or more of the following information: an identifier of the second frequency number, a superframe sequence number continuity indication, an indication of a frequency number switching moment, a re-access indication, a switching interval indication, or a preamble indication.

In still another possible implementation of the second aspect, the first physical layer control signaling includes the identifier of the second frequency number. The identifier of the second frequency number indicates a destination frequency number for switching, and includes but is not limited to a frequency number sequence number, a frequency number index number, or a channel number.

In still another possible implementation of the second aspect, the first physical layer control signaling includes the superframe sequence number continuity indication, and the superframe sequence number continuity indication indicates whether it is ensured that superframe sequence numbers of a first superframe and a second superframe are consecutive.

In a possible design, when being a sixth value, the superframe continuity indication indicates that it is not ensured that a superframe sequence number of a last superframe before operating frequency number switching and a superframe sequence number of a first superframe after operating frequency number switching are consecutive. In this case, scheduling performed before operating frequency number switching is invalid at the second frequency number, and the first node needs to determine scheduling again.

In a possible design, when being a seventh value, the superframe continuity indication indicates that a superframe sequence number of a last superframe before operating frequency number switching and a superframe sequence number of a first superframe after operating frequency number switching are consecutive. In this case, scheduling performed before operating frequency number switching is valid at the second frequency number, and rescheduling is not required. This shortens duration of switching.

In still another possible implementation of the second aspect, the first physical layer control signaling includes the indication of the frequency number switching moment. The indication of the switching moment indicates an occasion for switching the operating frequency number.

In a possible manner, the indication of the frequency number switching moment indicates a moment at which the first node starts to switch the operating frequency number, for example, indicates a superframe sequence number of a last superframe used by the first node for transmission at the current operating frequency number, or indicates an offset of a last superframe used by the first node for transmission at the current operating frequency number relative to a superframe for sending the first physical layer control signaling.

In another possible manner, the indication of the frequency number switching moment indicates a start moment at which transmission starts at the second frequency number, for example, indicates a superframe sequence number of a first superframe used by the first node for transmission at the second frequency number, or indicates an offset of a start moment of a first superframe used by the first node for transmission at the second frequency number relative to a start moment of a superframe for sending the first physical layer control signaling.

Optionally, the offset in the foregoing manner may be in a unit of a superframe, in a unit of a millisecond (ms), or in a unit of a microsecond (µs).

In still another possible implementation of the second aspect, the first physical layer control signaling includes the re-access indication. The re-access indication is indication information indicating whether the second node needs to perform re-access.

In some possible cases, the re-access indication indicates the second node not to perform the re-access operation. For example, a communication domain system configuration is not changed or changed as little as possible or only a communication domain system configuration (for example, a random access resource pool configuration or a channel sounding reference signal resource pool configuration) that does not affect scheduling of current transmission is changed during frequency number switching. This avoids re-access of the second node, and avoids invalidation of current scheduling.

In still another possible implementation of the second aspect, when being a first value, the re-access indication indicates the second node to perform an access operation. The access operation may include one or more of sending an access request, determining a communication key, determining a security context, and the like.

In still another possible implementation of the second aspect, when being a second value, the re-access indication indicates the second node to maintain a current access state or not to perform an access operation.

In still another possible implementation of the second aspect, the first physical layer control signaling includes the switching interval indication, and the switching interval indicates a time interval between a first superframe and a second superframe.

Optionally, the switching interval indication may include one or more of the following time intervals:
a time interval between an end moment of the first superframe and a start moment of the second superframe, a time interval between a start moment of the first superframe and the start moment of the second superframe, a time interval between the end moment of the first superframe and an end moment of the second superframe, a time interval between a synchronization signal in the first superframe and a synchronization signal in the second superframe, and the like.

In still another possible implementation of the second aspect, the switching interval indication further indicates whether the first node sends preamble information at the second frequency number. Correspondingly, the second node determines, based on the switching interval indication, whether the first node sends the preamble information at the second frequency number.

Further, if the switching interval indicates that the first node sends the preamble information at the second frequency number, the second node correspondingly receives the preamble information at the second frequency number; or if the switching interval indicates that the first node does not send the preamble information at the second frequency number, the second node does not need to receive the preamble information at the second frequency number.

In still another possible implementation of the second aspect, the method further includes:

When the switching interval indication is greater than a third value, the second node receives, at the second frequency number, preamble information from the first node.

In still another possible implementation of the second aspect, when being 0, the switching interval indication indicates that the first node does not send preamble information at the second frequency number; or when the switching interval indicator is a value greater than 0, the second node receives, at the second frequency number, the preamble information from the first node.

In still another possible implementation of the second aspect, the first physical layer control signaling includes the preamble indication, and the preamble indication indicates that the first node sends the preamble information at the second frequency number, or indicates that the first node does not send the preamble information at the second frequency number.

Optionally, when the preamble indication is a fourth value, the second node receives, at the second frequency number, the preamble information from the first node.

In still another possible implementation of the second aspect, when the switching interval indicates whether the preamble information is sent, the first physical layer control signaling does not need to carry an additional preamble indication.

In still another possible implementation of the second aspect, the first identifier may be used in a plurality of frequency number switching processes.

In still another possible implementation of the second aspect, the method further includes:

The second node receives, at an operating frequency number, second physical layer control signaling from the first node, where the second physical layer control signaling indicates switching of the operating frequency number to a third frequency number, some information bits in the second physical layer control signaling are scrambled by using the first identifier, and the operating frequency number is the second frequency number.

In still another possible implementation of the second aspect, the method further includes:

The second node sends frequency number capability information of the second node to the first node, where the frequency number capability information of the second node indicates a frequency number supported by the second node.

Optionally, the second frequency number belongs to a frequency number supported by the second frequency number.

Optionally, the frequency number capability information is used to determine a switching interval.

In still another possible implementation of the second aspect, the first physical layer control signaling is sent in a broadcast and/or multicast manner.

In still another possible implementation of the second aspect, the second node does not send feedback indicating whether the first physical layer control signaling is successfully detected. This can reduce signaling interaction, shorten duration of frequency number switching, and improve transmission efficiency.

In still another possible implementation of the second aspect, that the second node receives first physical layer control signaling at an operating frequency number includes:

The second node receives the first physical layer control signaling in a third superframe at an operating frequency number, where the operating frequency number is the first frequency number.

The method further includes: The second node receives third physical layer control signaling in a fourth superframe at an operating frequency number, where some or all information bits in the third physical layer control signaling are scrambled by using the first identifier, the operating frequency number is the first frequency number, and t the third physical layer control signaling indicates switching of the operating frequency number of the first node to the second frequency number.

In still another possible implementation of the second aspect, the first physical layer control signaling belongs to one of a plurality of pieces of physical layer control signaling, the plurality of pieces of physical layer control signaling further include fourth physical layer control signaling, and a length of the first physical layer control signaling is the same as a bit length of the fourth physical layer control signaling. A function of the first physical layer control signaling is different from a function of the fourth physical layer control signaling.

In the foregoing implementation, a bit length of the first physical layer control signaling is the same as a length of another type of physical layer control signaling indicating another function. In other words, a bit length of the first physical layer control signaling belongs to an existing bit length.

According to a third aspect, an embodiment of this application provides a communication apparatus. The communication apparatus is configured to implement the method described in any one of the first aspect or the possible implementations of the first aspect.

In a possible implementation of the third aspect, the communication apparatus includes a first communication unit and a second communication unit.

In another possible implementation of the third aspect, the first communication unit is configured to send higher layer signaling, and the higher layer signaling includes a first identifier; and
the second communication unit is configured to send first physical layer control signaling at an operating frequency number, some or all information bits in the first physical layer control signaling are scrambled by using the first identifier, and the operating frequency number is a first frequency number; and the first physical layer control signaling indicates switching of an operating frequency number of a first node to a second frequency number.

Optionally, the communication apparatus is a first node, or the communication apparatus is a module (for example, a chip, an integrated circuit, or a software module) in the first node.

In a possible implementation of the third aspect, the first identifier corresponds to a frequency number switching function.

In another possible implementation of the third aspect, the first physical layer control signaling includes a function indication field, and the function indication field indicates that the first identifier corresponds to the frequency number switching function.

In still another possible implementation of the third aspect, the some information bits in the first physical layer control signaling include a cyclic redundancy check CRC code of the first physical layer control signaling.

In still another possible implementation of the third aspect, a resource for sending the first physical layer control signaling belongs to a pre-configured physical layer control signaling common resource.

In still another possible implementation of the third aspect, the communication apparatus further includes a third communication unit, and the third communication unit is configured to communicate with at least one second node at the second frequency number.

In still another possible implementation of the third aspect, superframe sequence numbers of a first superframe and a second superframe are consecutive; and the first superframe is a last superframe for transmitting data and/or signaling at the first frequency number before the operating frequency number of the first node is switched from the first frequency number to the second frequency number, and the second superframe is a first superframe for transmitting data and/or signaling at the second frequency number after the operating frequency number of the first node is switched from the first frequency number to the second frequency number.

That is, before and after operating frequency number switching, superframe sequence numbers of superframes are consecutive.

In still another possible implementation of the third aspect, an interval between an end moment of the first superframe and a start moment of the second superframe is N milliseconds, N is an integer, and N≥0.

In still another possible implementation of the third aspect, the first physical layer control signaling includes one or more of the following information: an identifier of the second frequency number, a superframe sequence number continuity indication, an indication of a frequency number switching moment, a re-access indication, a switching interval indication, or a preamble indication.

In still another possible implementation of the third aspect, the first physical layer control signaling includes the identifier of the second frequency number. The identifier of the second frequency number indicates a destination frequency number for switching, and includes but is not limited to a frequency number sequence number, a frequency number index number, or a channel number.

In still another possible implementation of the third aspect, the first physical layer control signaling includes the superframe sequence number continuity indication, and the superframe sequence number continuity indication indicates whether it is ensured that superframe sequence numbers of a first superframe and a second superframe are consecutive.

In a possible design, when being a sixth value, the superframe continuity indication indicates that it is not ensured that a superframe sequence number of a last superframe before operating frequency number switching and a superframe sequence number of a first superframe after operating frequency number switching are consecutive.

In a possible design, when being a seventh value, the superframe continuity indication indicates that a superframe sequence number of a last superframe before operating frequency number switching and a superframe sequence number of a first superframe after operating frequency number switching are consecutive.

In still another possible implementation of the third aspect, the first physical layer control signaling includes the indication of the frequency number switching moment. The indication of the switching moment indicates an occasion for switching the operating frequency number.

In a possible manner, the indication of the frequency number switching moment indicates a moment at which the first node starts to switch the operating frequency number, for example, indicates a superframe sequence number of a last superframe used by the first node for transmission at the current operating frequency number, or indicates an offset of a last superframe used by the first node for transmission at the current operating frequency number relative to a superframe for sending the first physical layer control signaling.

In another possible manner, the indication of the frequency number switching moment indicates a start moment at which transmission starts at the second frequency number, for example, indicates a superframe sequence number of a first superframe used by the first node for transmission at the second frequency number, or indicates an offset of a start moment of a first superframe used by the first node for transmission at the second frequency number relative to a start moment of a superframe for sending the first physical layer control signaling.

Optionally, the offset in the foregoing manner may be in a unit of a superframe, in a unit of a millisecond (ms), or in a unit of a microsecond (µs).

In still another possible implementation of the third aspect, the first physical layer control signaling includes the re-access indication. The re-access indication is indication information indicating whether the second node needs to perform re-access.

In some possible cases, the re-access indication indicates the second node not to perform the re-access operation. For example, a communication domain system configuration is not changed or changed as little as possible or only a communication domain system configuration (for example, a random access resource pool configuration or a channel sounding reference signal resource pool configuration) that does not affect scheduling of current transmission is changed during frequency number switching. This avoids re-access of the second node, and avoids invalidation of current scheduling.

In still another possible implementation of the third aspect, when being a first value, the re-access indication indicates the second node to perform an access operation at the second frequency number.

In still another possible implementation of the third aspect, when being a second value, the re-access indication indicates the second node to maintain a current access state or not to perform an access operation.

In still another possible implementation of the third aspect, the first physical layer control signaling includes the switching interval indication, and the switching interval indicates a time interval between a first superframe and a second superframe.

Optionally, the switching interval indication may include one or more of the following time intervals:
a time interval between an end moment of the first superframe and a start moment of the second superframe, a time interval between a start moment of the first superframe and the start moment of the second superframe, a time interval between the end moment of the first superframe and an end moment of the second superframe, a time interval between a synchronization signal in the first superframe and a synchronization signal in the second superframe, and the like.

In still another possible implementation of the third aspect, the switching interval indication further indicates whether the communication apparatus sends preamble information at the second frequency number.

In still another possible implementation of the third aspect, the communication apparatus does not send preamble information at the second frequency number. This shortens an interval between a last superframe before switching and a first superframe after switching, and reduces switching time consumed.

In still another possible implementation of the third aspect, the communication apparatus further includes a third communication unit, and the third communication unit is configured to:
send preamble information at the second frequency number when the switching interval indication is greater than a third value.

Optionally, when the switching interval indication is less than a third value, the communication apparatus does not send preamble information at the second frequency number.

It should be understood that when the switching interval is equal to a third value, the communication apparatus may not send preamble information at the second frequency number or not send preamble information, which is subject to specific implementation.

In still another possible implementation of the third aspect, when the switching interval indication is 0, the communication apparatus does not send preamble information at the second frequency number; or when the switching interval indication is a value greater than 0, the communication apparatus sends preamble information at the second frequency number.

In still another possible implementation of the third aspect, the first physical layer control signaling includes the preamble indication, and the preamble indication indicates that the first node sends the preamble information at the second frequency number, or indicates that the first node does not send the preamble information at the second frequency number.

Optionally, the communication apparatus includes the third communication unit, and the third communication unit is configured to: send the preamble information at the second frequency number when the preamble indication is a fourth value.

Optionally, when the preamble indication is a fifth value, the communication apparatus does not send the preamble information at the second frequency number.

In still another possible implementation of the third aspect, when the switching interval indicates whether the preamble information is sent, the first physical layer control signaling does not need to carry an additional preamble indication.

In still another possible implementation of the third aspect, the first identifier may be used in a plurality of frequency number switching processes. That is, after the communication apparatus sends the first identifier to the second node, in subsequent plurality of operating frequency number switching processes, signaling indicating frequency number switching may be scrambled by using the same first identifier.

In still another possible implementation of the third aspect, the second communication unit is further configured to:
send second physical layer control signaling at an operating frequency number, where the second physical layer control signaling indicates switching of the operating frequency number to a third frequency number, some or all information bits in the second physical layer control signaling are scrambled by using the first identifier, and the operating frequency number is the second frequency number.

In still another possible implementation of the third aspect, the communication apparatus further includes a fourth communication unit, and the fourth communication unit is configured to receive frequency number capability information of at least one second node, where the frequency number capability information includes one or more of a supported frequency number, a supported switching interval, and the like.

Optionally, the second frequency number belongs to a frequency number supported by the second frequency number.

In still another possible implementation of the third aspect, the communication apparatus further includes a processing unit, and the processing unit is configured to determine a switching interval based on the frequency number capability information reported by the at least one second node.

In still another possible implementation of the third aspect, the first physical layer control signaling is sent in a broadcast and/or multicast manner.

In still another possible implementation of the third aspect, the communication apparatus separately sends a plurality of times of physical layer control signaling in a plurality of superframes to indicate same frequency number switching.

In still another possible implementation of the third aspect, the second communication unit is further configured to:
send the first physical layer control signaling in a third superframe at the operating frequency number, where the operating frequency number is the first frequency number; and
send third physical layer control signaling in a fourth superframe at an operating frequency number, where some or all information bits in the third physical layer control signaling are scrambled by using the first identifier, the operating frequency number is the first frequency number, and the third physical layer control signaling indicates switching of the operating frequency number of the first node to the second frequency number.

In still another possible implementation of the third aspect, the first physical layer control signaling belongs to one of a plurality of pieces of physical layer control signaling, the plurality of pieces of physical layer control signaling further include fourth physical layer control signaling, and a length of the first physical layer control signaling is the same as a bit length of the fourth physical layer control signaling. A function of the first physical layer control signaling is different from a function of the fourth physical layer control signaling.

According to a fourth aspect, an embodiment of this application provides a communication apparatus. The communication apparatus is configured to implement the method described in any one of the first aspect or the possible implementations of the first aspect.

In a possible implementation of the fourth aspect, the communication apparatus includes a first communication unit and a second communication unit.

The first communication unit is configured to receive higher layer signaling from a first node, and the higher layer signaling includes a first identifier;
the second communication unit is configured to receive first physical layer control signaling at an operating frequency number, where some or all information bits in the first physical layer control signaling are scrambled by using the first identifier, and the operating frequency number is a first frequency number; and
the first physical layer control signaling indicates switching of an operating frequency number of the first node to a second frequency number.

Optionally, the communication apparatus is a second node, or the communication apparatus is a module (for example, a chip, an integrated circuit, or a software module) in the second node.

In another possible implementation of the fourth aspect, the first identifier corresponds to a frequency number switching function.

In still another possible implementation of the fourth aspect, the first physical layer control signaling includes a function indication field, and the function indication field indicates that the first identifier corresponds to the frequency number switching function.

In still another possible implementation of the fourth aspect, the some information bits in the first physical layer control signaling include a cyclic redundancy check CRC code of the first physical layer control signaling.

In still another possible implementation of the fourth aspect, a resource for sending the first physical layer control signaling belongs to a pre-configured physical layer control signaling common resource.

In still another possible implementation of the fourth aspect, the communication apparatus further includes a processing unit and a third communication unit;
the processing unit is further configured to descramble the some or all information bits in the first physical layer control signaling by using the first identifier; and
the third communication unit is further configured to communicate with the first node at the second frequency number.

It should be understood that, when all the information bits in the first physical layer control signaling are scrambled by using the first identifier, the processing unit descrambles all the information bits in the first physical layer control signaling by using the first identifier.

When the some information bits in the first physical layer control signaling are scrambled by using the first identifier, the processing unit descrambles the some information bits in the first physical layer control signaling by using the first identifier.

In still another possible implementation of the fourth aspect, superframe sequence numbers of a first superframe and a second superframe are consecutive; and the first superframe is a last superframe for transmitting data and/or signaling at the first frequency number before the operating frequency number of the first node is switched from the first frequency number to the second frequency number, and the second superframe is a first superframe for transmitting data and/or signaling at the second frequency number after the operating frequency number of the first node is switched from the first frequency number to the second frequency number.

That is, before and after operating frequency number switching, superframe sequence numbers of superframes are consecutive.

In still another possible implementation of the fourth aspect, an interval between an end moment of the first superframe and a start moment of the second superframe is N milliseconds, N is an integer, and N≥0.

In still another possible implementation of the fourth aspect, the first physical layer control signaling includes one or more of the following information: an identifier of the second frequency number, a superframe sequence number continuity indication, an indication of a frequency number switching moment, a re-access indication, a switching interval indication, or a preamble indication.

In still another possible implementation of the fourth aspect, the first physical layer control signaling includes the identifier of the second frequency number. The identifier of the second frequency number indicates a destination frequency number for switching, and includes but is not limited to a frequency number sequence number, a frequency number index number, or a channel number.

In still another possible implementation of the fourth aspect, the first physical layer control signaling includes the superframe sequence number continuity indication, and the superframe sequence number continuity indication indicates whether it is ensured that superframe sequence numbers of a first superframe and a second superframe are consecutive.

In a possible design, when being a sixth value, the superframe continuity indication indicates that it is not ensured that a superframe sequence number of a last superframe before operating frequency number switching and a superframe sequence number of a first superframe after operating frequency number switching are consecutive.

In a possible design, when being a seventh value, the superframe continuity indication indicates that a superframe sequence number of a last superframe before operating frequency number switching and a superframe sequence number of a first superframe after operating frequency number switching are consecutive.

In still another possible implementation of the fourth aspect, the first physical layer control signaling includes the indication of the frequency number switching moment. The indication of the switching moment indicates an occasion for switching the operating frequency number.

In a possible manner, the indication of the frequency number switching moment indicates a moment at which the first node starts to switch the operating frequency number, for example, indicates a superframe sequence number of a last superframe used by the first node for transmission at the current operating frequency number, or indicates an offset of a last superframe used by the first node for transmission at the current operating frequency number relative to a superframe for sending the first physical layer control signaling.

In another possible manner, the indication of the frequency number switching moment indicates a start moment at which transmission starts at the second frequency number, for example, indicates a superframe sequence number of a first superframe used by the first node for transmission at the second frequency number, or indicates an offset of a start moment of a first superframe used by the first node for transmission at the second frequency number relative to a start moment of a superframe for sending the first physical layer control signaling.

Optionally, the offset in the foregoing manner may be in a unit of a superframe, in a unit of a millisecond (ms), or in a unit of a microsecond (µs).

In still another possible implementation of the fourth aspect, the first physical layer control signaling includes the re-access indication. The re-access indication is indication information indicating whether the second node needs to perform re-access.

In some possible cases, the re-access indication indicates the second node not to perform the re-access operation. For example, a communication domain system configuration is not changed or changed as little as possible or only a communication domain system configuration (for example, a random access resource pool configuration or a channel sounding reference signal resource pool configuration) that does not affect scheduling of current transmission is changed during frequency number switching. This avoids re-access of the second node, and avoids invalidation of current scheduling.

In still another possible implementation of the fourth aspect, the communication apparatus further includes a third communication unit, and the third communication unit is configured to: perform a re-access operation when the re-access indication is a first value.

In still another possible implementation of the fourth aspect, when being a second value, the re-access indication indicates the second node to maintain a current access state or not to perform an access operation.

In still another possible implementation of the fourth aspect, the first physical layer control signaling includes the switching interval indication, and the switching interval indicates a time interval between a first superframe and a second superframe.

Optionally, the switching interval indication may include one or more of the following time intervals:
a time interval between an end moment of the first superframe and a start moment of the second superframe, a time interval between a start moment of the first superframe and the start moment of the second superframe, a time interval between the end moment of the first superframe and an end moment of the second superframe, a time interval between a synchronization signal in the first superframe and a synchronization signal in the second superframe, and the like.

In still another possible implementation of the fourth aspect, the switching interval indication further indicates whether the first node sends preamble information at the second frequency number.

The communication apparatus may determine, based on the switching interval indication, whether to receive, at the second frequency number, the preamble information from the first node.

In still another possible implementation of the fourth aspect, the communication apparatus further includes a third communication unit, and the third communication unit is configured to: when the switching interval indication is greater than a third value, receive, at the second frequency number, the preamble information from the first node.

In still another possible implementation of the fourth aspect, when being 0, the switching interval indication indicates that the first node does not send the preamble information at the second frequency number; or when being a value greater than 0, the switching interval indication indicates that the first node sends the preamble information at the second frequency number.

The communication apparatus further includes a third communication unit, and the third communication unit is configured to: when the switching interval indication is a value greater than 0, receive, at the second frequency number, the preamble information from the first node.

In still another possible implementation of the fourth aspect, the first physical layer control signaling includes the preamble indication, and the preamble indication indicates that the first node sends the preamble information at the second frequency number, or indicates that the first node does not send the preamble information at the second frequency number.

Optionally, the third communication unit is configured to: when the preamble indication is a fourth value, receive, at the second frequency number, the preamble information from the first node.

In still another possible implementation of the fourth aspect, when the switching interval indicates whether the preamble information is sent, the first physical layer control signaling does not need to carry an additional preamble indication.

In still another possible implementation of the fourth aspect, the first identifier may be used in a plurality of frequency number switching processes.

In still another possible implementation of the fourth aspect, the second communication unit is further configured to:
receive, at an operating frequency number, second physical layer control signaling from the first node, where the second physical layer control signaling indicates switching of the operating frequency number to a third frequency number, some information bits in the second physical layer control signaling are scrambled by using the first identifier, and the operating frequency number is the second frequency number.

In still another possible implementation of the fourth aspect, the communication apparatus further includes a fourth communication unit, and the fourth communication unit is configured to send frequency number capability information of the second node to the first node, where the frequency number capability information of the second node indicates a frequency number supported by the second node.

Optionally, the second frequency number belongs to a frequency number supported by the second frequency number.

Optionally, the frequency number capability information is used to determine a switching interval.

In still another possible implementation of the fourth aspect, the first physical layer control signaling is sent in a broadcast and/or multicast manner.

In still another possible implementation of the fourth aspect, the communication apparatus does not send feedback indicating whether the first physical layer control signaling is successfully detected.

In still another possible implementation of the fourth aspect, the second communication unit is further configured to:
receive the first physical layer control signaling in a third superframe at the operating frequency number, where the operating frequency number is the first frequency number; and
receive third physical layer control signaling in a fourth superframe at an operating frequency number, where some or all information bits in the third physical layer control signaling are scrambled by using the first identifier, the operating frequency number is the first frequency number, and the third physical layer control signaling indicates switching of the operating frequency number of the first node to the second frequency number.

In still another possible implementation of the fourth aspect, the first physical layer control signaling belongs to one of a plurality of pieces of physical layer control signaling, the plurality of pieces of physical layer control signaling further include fourth physical layer control signaling, and a length of the first physical layer control signaling is the same as a bit length of the fourth physical layer control signaling. A function of the first physical layer control signaling is different from a function of the fourth physical layer control signaling.

In the foregoing implementation, a bit length of the first physical layer control signaling is the same as a length of another type of physical layer control signaling indicating another function. In other words, a bit length of the first physical layer control signaling belongs to an existing bit length.

According to a fifth aspect, an embodiment of this application discloses a communication apparatus, including a processor and a communication interface. The communication interface is configured to receive and/or send a signal, and/or the communication interface is configured to provide input and/or output for the processor.

When the processor invokes a computer program or instructions in a memory, the communication apparatus implements the method described in any one of the first aspect or the implementations of the first aspect.

According to a sixth aspect, an embodiment of this application discloses a communication apparatus, including a processor and a communication interface. The communication interface is configured to receive and/or send a signal, and/or the communication interface is configured to provide input and/or output for the processor.

When the processor invokes a computer program or instructions in a memory, the communication apparatus implements the method described in any one of the second aspect or the implementations of the second aspect.

It should be noted that the processor included in the communication apparatuses described in the fifth aspect and/or the sixth aspect may be a processor specially configured to perform these methods (referred to as a dedicated processor for ease of differentiation), or may be a processor that performs these methods by invoking the computer program, for example, a general-purpose processor. Optionally, the at least one processor may further include both a dedicated processor and a general-purpose processor.

Optionally, the foregoing computer program or instructions may be stored in the memory. For example, the memory may be a non-transitory (non-transitory) memory, for example, a read-only memory (Read Only Memory, ROM). The memory and the processor may be integrated on a same component, or may be separately disposed on different components. A type of the memory and a manner of disposing the memory and the processor are not limited in embodiments of this application.

In a possible implementation, the at least one memory is located outside the communication apparatus.

In another possible implementation, the at least one memory is located in the communication apparatus.

In still another possible implementation, some memories of the at least one memory are located in the communication apparatus, and the other memories are located outside the communication apparatus.

In this application, the processor and the memory may alternatively be integrated into one component. In other words, the processor and the memory may alternatively be integrated together.

According to a seventh aspect, an embodiment of this application further provides a communication apparatus. The communication apparatus includes a logic circuit and a communication interface. The communication interface is configured to receive a signal or send a signal, and the logic circuit is configured to receive a signal or send a signal through the communication interface, to implement the method according to any one of the first aspect or the implementations of the first aspect.

According to an eighth aspect, an embodiment of this application further provides a communication apparatus. The communication apparatus includes a logic circuit and a communication interface. The communication interface is configured to receive a signal or send a signal, and the logic circuit is configured to receive a signal or send a signal through the communication interface, to implement the method according to any one of the second aspect or the implementations of the first aspect.

According to a ninth aspect, an embodiment of this application further provides a communication system. The communication system includes a first node and/or a second node.

The first node includes the communication apparatus described in any one of the third aspect or the possible implementations of the third aspect.

The second node includes the communication apparatus described in any one of the fourth aspect or the possible implementations of the fourth aspect.

According to a tenth aspect, an embodiment of this application further provides a communication system. The communication system includes a first node and/or a second node.

The first node includes the communication apparatus described in the fifth aspect, and the second node includes the communication apparatus described in the sixth aspect.

According to an eleventh aspect, an embodiment of this application further provides a communication system. The communication system includes a first node and/or a second node.

The first node includes the communication apparatus described in the seventh aspect, and the second node includes the communication apparatus described in the seventh aspect.

According to a twelfth aspect, an embodiment of this application discloses a computer-readable storage medium. The computer-readable storage medium stores a computer program, and when the computer program is run on a communication apparatus, the communication apparatus is enabled to perform the method described in any one of the first aspect or the possible implementations of the first aspect, or performs the method described in any one of the second aspect or the possible implementations of the second aspect.

According to a thirteenth aspect, an embodiment of this application discloses a computer program product. When the computer program product runs on one or more processors, the method described in any one of the first aspect or the possible implementations of the first aspect is performed, or the method described in any one of the second aspect or the possible implementations of the second aspect is performed.

According to a fourteenth aspect, an embodiment of this application discloses a terminal. The terminal includes a first node and/or a second node. The terminal includes but is not limited to a handheld terminal device, a transport means, a vehicle-mounted device, a sensing device, or an entertainment and leisure device. For example, the terminal may be a smart terminal or a transportation vehicle such as a vehicle, an uncrewed aerial vehicle, or a robot.

In a possible implementation, the second node includes the apparatus described in any one of the third aspect or the possible implementations of the third aspect. The first node includes the communication apparatus described in any one of the fourth aspect or the possible implementations of the fourth aspect.

In another possible implementation, the second node includes the apparatus described in any one of the fifth aspect or the possible implementations of the fifth aspect. The first node includes the communication apparatus described in any one of the sixth aspect or the possible implementations of the sixth aspect.

In still another possible implementation, the second node includes the apparatus described in any one of the seventh aspect or the possible implementations of the seventh aspect. The first node includes the communication apparatus described in any one of the eighth aspect or the possible implementations of the eighth aspect.

Optionally, the first node includes one or more of modules such as a gateway, a base station, and avehicle cockpit domain controller (cockpit domain controller, CDC).

Optionally, the second node includes one or more of modules such as a camera, a screen, a microphone, a speaker, a radar, an electronic key, keyless entry, a startup system controller, a battery management system, and a battery pack.

For beneficial effect of the technical solutions provided in the second aspect to the fourteenth aspect of this application, refer to the beneficial effect of the technical solutions in the first aspect. Details are not described herein again.

### BRIEF DESCRIPTION OF DRAWINGS

The following briefly describes accompanying drawings used in descriptions of embodiments.
FIG. 1A is a diagram of communication domains according to an embodiment of this application;
FIG. 1B is another diagram of communication domains according to an embodiment of this application;
FIG. 2 is a diagram of frequency numbers according to an embodiment of this application;
FIG. 3 is a diagram of a communication system according to an embodiment of this application;
FIG. 4 is a schematic flowchart of a communication method according to an embodiment of this application;
FIG. 5 is a diagram of a first identifier according to an embodiment of this application;
FIG. 6 is a diagram of correspondences between another first identifier and a function according to an embodiment of this application;
FIG. 7 is a diagram of a plurality of superframes according to an embodiment of this application;
FIG. 8 is another diagram of a plurality of superframes according to an embodiment of this application;
FIG. 9 is a schematic flowchart of another communication method according to an embodiment of this application;
FIG. 10 is a schematic flowchart of another communication method according to an embodiment of this application;
FIG. 11 is a diagram of a structure of a communication apparatus according to an embodiment of this application;
FIG. 12 is a diagram of a structure of a communication apparatus according to an embodiment of this application; and
FIG. 13 is a diagram of a structure of another communication apparatus according to an embodiment of this application.

### DESCRIPTION OF EMBODIMENTS

To facilitate understanding of detailed implementation of solutions in embodiments of this application, the following first describes technical terms used in embodiments of this application.

### 1. Node (node)

A node (or referred to as a communication node) is a device having a communication capability, and includes but is not limited to one or more of a terminal device, a network device, an industrial device, or an entertainment device.

The terminal device includes a handheld terminal, a wearable terminal, a transport means, a vehicle-mounted device, a sensing device, a smart home device, and the like. The handheld terminal includes but is not limited to a mobile phone, a tablet, or a notebook computer. The wearable device includes but is not limited to headsets, smart bands, smart watches, or smart glasses. The transport means includes but is not limited to a vehicle, a ship, aircraft, rail transport (such as a subway and a high-speed railway), or a logistics robot (such as an automated guided vehicle (automated guided vehicle, AGV)). The vehicle-mounted device includes but is not limited to a domain controller (domain controller, DC), a screen, a microphone, a speaker, an electronic key, keyless entry, a startup system controller, and a battery management system (battery management system, BMS). The sensing device includes but is not limited to a camera, a radar, a lidar, an illumination sensor, a temperature sensor, or a humidity sensor. The smart home device includes but is not limited to a projector, a smart television, a smart refrigerator, a smart home gateway, or a security protection device.

The network device includes but is not limited to a router, a switch, or a base station. The industrial device is, for example, an industrial robot and a robotic arm. The leisure and entertainment device is, for example, a virtual reality (virtual reality, VR) device, a mixed reality (Mixed Reality, MR) device, a massage chair, a home theater, a game control device, or a 4D cinema cockpit.

The node in embodiments of this application may be used in various scenarios such as a smart car, a smart home, a smart terminal, smart manufacturing, or a smart exhibition hall. In some application scenarios or some network types, a name of a device having a similar communication capability may not be referred to as a node. However, for ease of description, devices having communication capabilities are collectively referred to as nodes in embodiments of this application.

### 2. Communication domain

In a communication system, a node includes a management node (or referred to as a G node) and a managed node (or referred to as a T node). The G node manages a specific quantity of T nodes, and the G node is connected to these T nodes to jointly complete a specific communication function.

The G node and the T nodes connected to the G node belong to a communication domain. Optionally, there may be one or more G nodes in a communication domain. For example, a single G node and a T node connected to the G node jointly form a communication domain.

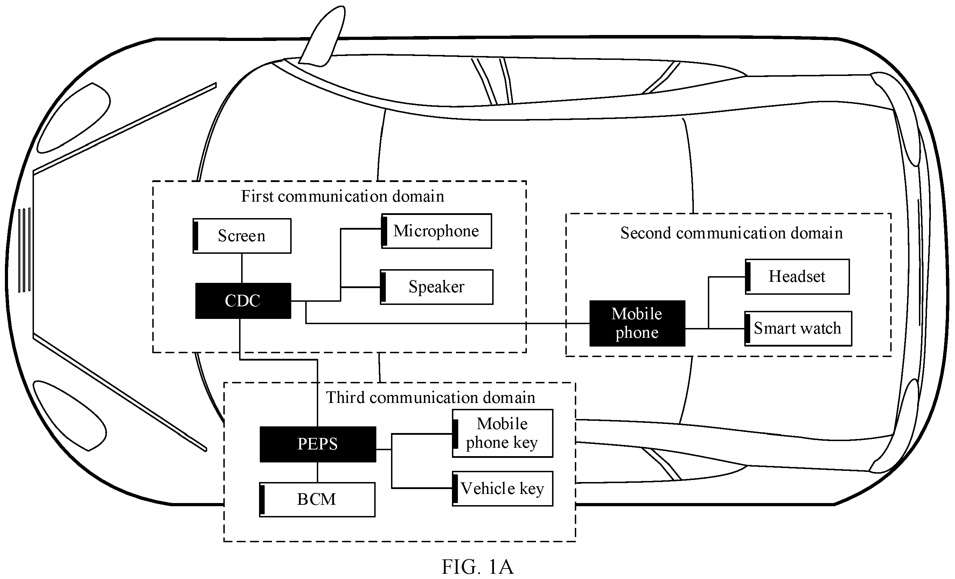

FIG. 1A is a diagram of communication domains according to an embodiment of this application. A smart car scenario is used as an example. A cockpit domain controller (cockpit domain controller, CDC) may be used as a G node, and various vehicle-mounted devices (for example, a microphone and a loudspeaker) are used as T nodes, to jointly complete a cockpit entertainment function. In this case, the CDC and the vehicle-mounted devices form a communication domain, which is referred to as a first communication domain for ease of differentiation. Optionally, when a mobile phone is connected to the CDC, the mobile phone may also be used as a T node in the first communication domain. Similarly, when passive entry passive start (Passive Entry Passive Start, PEPS) is connected to the CDC, the PEPS may also be used as a T node in the first communication domain.

There may be a plurality of communication domains in some scenarios. As shown in FIG. 1A, the mobile phone may also be used as a G node to connect to a wearable device (for example, a headset or a smart watch). In this case, the mobile phone and the wearable device form another communication domain, for example, a second communication domain shown in FIG. 1A. For another example, the PEPS may also be used as a G node to connect to a body control module (body control module, BCM), a mobile phone key, and a vehicle key. In this case, the PEPS, the BCM, the mobile phone key, and the vehicle key form another communication domain, for example, a third communication domain shown in FIG. 1A.

In a scenario in which there are a plurality of communication domains, the plurality of communication domains may have different levels. For example, a communication domain may be classified into an advanced communication domain, a general communication domain, and the like. In this case, the advanced communication domain can perform resource coordination, to implement coordination and coexistence between a plurality of domains.

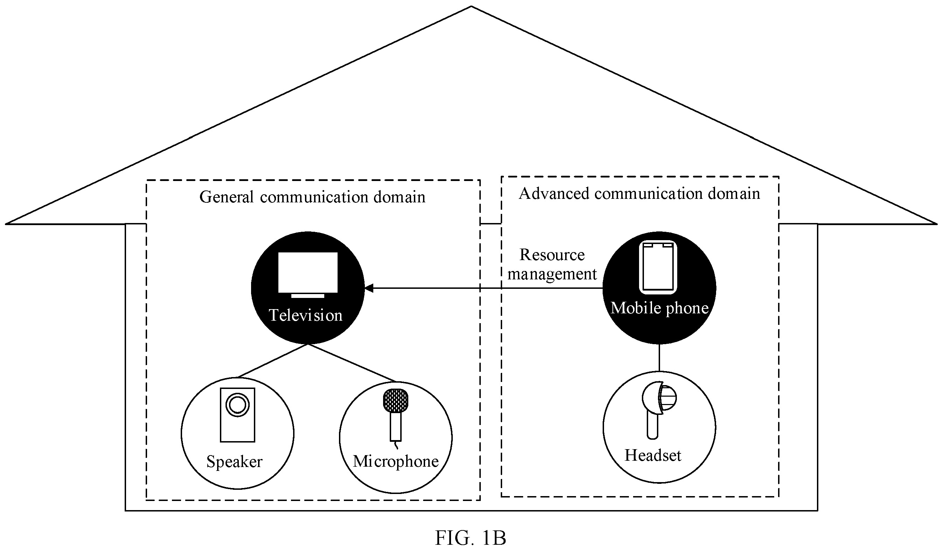

FIG. 1B is another diagram of communication domains according to an embodiment of this application. A smart home scenario is used as an example. A television, a speaker connected to the television, and a microphone belong to a communication domain, and the communication domain is a general communication domain. A mobile phone and a headset connected to the mobile phone belong to another communication domain, and the communication domain is an advanced communication domain. The mobile phone can implement management of resources between a plurality of domains.

### 3. G link

A communication link from a G node to a T node may be referred to as a G link. A communication link from a T node to a G node may be referred to as a T link.

### 4. Common resource

A common resource is a resource that can be shared by a plurality of nodes, and includes but is not limited to a time-frequency resource. A node that shares a common resource can detect signaling on the common resource.

For example, in a communication domain including a G node and a T node, a common resource is a pre-configured resource that is shared by the T node in the communication domain.

In a possible implementation, the common resource may be used to transmit a plurality of types of signaling. For example, the common resource may include a common resource for transmitting physical layer control signaling. A node may blindly detect physical layer control signaling in a common resource for transmitting the physical layer control signaling.

### 5. Detection and blind detection

Signal detection is a process of attempting to receive a signal. A second node is used as an example. The second node attempts to receive a signal on a time-frequency resource. If decoding and CRC check performed on the signal succeed, it is considered that the signal is successfully received.

Blind detection is a signal detection manner. On a premise that a node in a specified time-frequency resource does not know whether to transmit information and does not know content of the transmitted information, the node attempts to receive a signal and identify information content corresponding to the signal.

### 6. Scrambling

Scrambling refers to obtaining a new signal based on an original signal and a scrambling code. A reverse operation of scrambling is descrambling.

### 7. Superframe

A superframe, namely, a time unit, includes a plurality of radio frames. Each radio frame includes one or more symbols, and the symbols may be, for example, orthogonal frequency division multiplexing (orthogonal frequency division multiplexing, OFDM) symbols.

A SparkLink basic (SparkLink basic, SLB) technology is used as an example. A superframe period is 1 millisecond (ms), that is, duration of a superframe is 1 ms. One superframe includes 48 radio frames, and duration of each radio frame is 1/48=20.833 microseconds (µs).

The superframe has a superframe sequence number (or referred to as a number or a superframe number), to distinguish between different superframes in a period of time. Generally, one or more bits are used for representation, that is, the superframe sequence number includes S bits, where S is a positive integer, and S>0.

Because a quantity of bits of the superframe sequence number is usually limited, rollover occurs when the superframe sequence number reaches a maximum count value. For example, a superframe sequence number is indicated by 8-bit data (from 0x00 to 0xFF). When signals are continuously sent/received in a plurality of superframes, the superframe sequence number is continuously accumulated. When the superframe sequence number reaches 0xFF, frame number rollover (rollover) occurs, and count starts from 0x00 again.

### 8. Frequency number

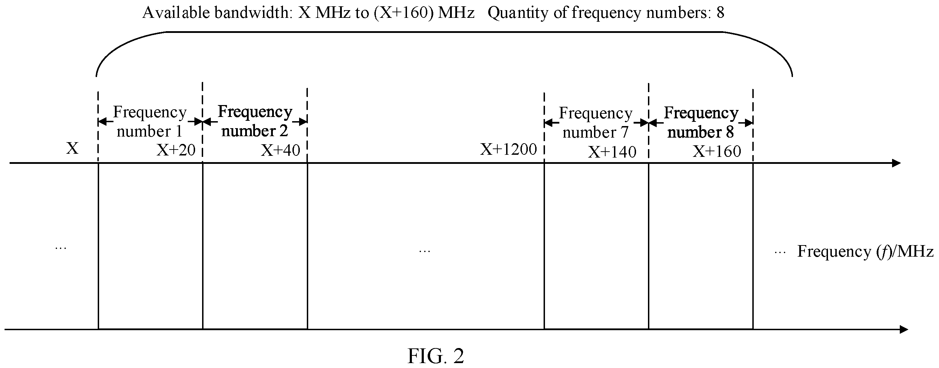

A frequency number, also referred to as a carrier, is a number of a frequency range, and indicates a transmit/receive frequency. For example, FIG. 2 is a diagram of possible frequency numbers. An available bandwidth ranges from X megahertz (MHz) to (X+160) MHz. The available bandwidth is divided into eight frequency bands based on a frequency spacing of 20 MHz. All frequency bands are numbered as 1, 2, 3, 4, ..., and 8 respectively. Numbers of these fixed frequencies are frequency numbers. It should be understood that the available bandwidth, a width of the frequency band, and a quantity of frequency numbers shown in FIG. 2 are merely examples, and are not intended to limit embodiments of this application.

The frequency numbers shown in FIG. 2 are used as an example. If an operating frequency number of a first node is the frequency number 1, a signal sent by the first node is sent within a frequency range corresponding to the frequency number 1, and/or a signal received by the first node is received within the frequency range corresponding to the frequency number 1.

When the operating frequency number is the frequency number 1, signaling, data, and the like that are sent and/or received by the first node are transmitted at the frequency number 1. After the operating frequency number is switched to the frequency number 2, signaling, data, and the like that are sent and/or received by the first node are transmitted on the frequency number 2.

### 9. Preamble information (or referred to as a preamble)

Preamble information is a segment of information sent by a first node at a frequency number obtained after frequency number switching. For example, after frequency number switching, a segment of preamble information is first sent before a first node enters a superframe structure.

Optionally, the preamble information may indicate a change of configuration information, for example, indicate a change of information such as a random access resource pool configuration and a channel sounding reference signal (Sounding Reference Signal, SRS) resource pool configuration.

In some possible designs, the preamble information may be used for synchronization with a receive node.

In some other possible designs, the preamble information may be used to obtain communication channel information, for example, used for channel estimation and channel quality evaluation. For example, a first node sends preamble information at a second frequency number, and correspondingly, a second node receives the preamble information. The second node may measure a channel between the first node and the second node based on the preamble information, to obtain channel quality and the like.

In some possible implementations, content of the preamble information may be predefined (for example, specified in a protocol), pre-configured, configured by using higher layer signaling, or the like.

### 10. Access

"Access" mentioned in embodiments of this application indicates a process in which a node establishes a connection to another node. In some specific technical scenarios, a process of "accessing" another node by one node may also be described as "associating" the another node by the one node.

The foregoing descriptions of the technical terms are optionally used in the following embodiments.

The following describes a system architecture in embodiments of this application. It should be noted that the system architecture described in this application is intended to describe technical solutions in this application more clearly, but constitutes no limitation on the technical solutions provided in this application. A person of ordinary skill in the art may know that, with evolution of the system architecture and emergence of a new service scenario, the technical solutions provided in this application are also applicable to a similar technical problem.

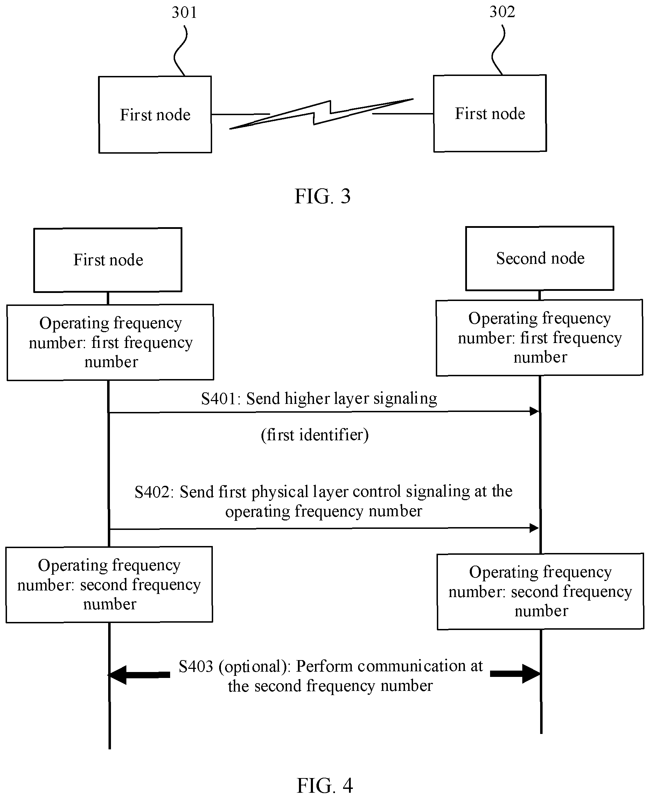

FIG. 3 is a diagram of a possible communication system according to an embodiment of this application. The communication system includes a first node 301 and a second node 302. The first node 301 has a communication capability and is capable of sending a signal.

The first node 301 sends a signal at a frequency number. A frequency number at which a signal is sent and a signal is received is referred to as an operating frequency number. The operating frequency number may be changed, and a change of the operating frequency number is referred to as frequency number switching.

The second node 302 has a communication capability and is capable of receiving a signal. The second node 302 can receive, at the operating frequency number, the signal sent by the first node 301, that is, the first node 301 communicates with the second node 302 at the operating frequency number.

Optionally, a link for communication between the second node 302 and the first node 301 may include various types of connection media, including a wired link (for example, an optical fiber), a wireless link, a combination of a wired link and a wireless link, and the like. For example, a short-range connection technology may be used and include SparkLink (SparkLink), 802.11b/g, Bluetooth (Bluetooth), Zigbee (Zigbee), a radio frequency identification (radio frequency identification, RFID) technology, an ultra-wideband (ultra-wideband, UWB) technology, and the like. For another example, a long-range connection technology may alternatively be used and includes but is not limited to a long term evolution (Long Term Evolution, long term evolution)-based communication technology, a 5th generation mobile communication technology (5th generation mobile networks or 5th generation wireless systems, 5th-Generation, 5G or 5G technology for short), a global system for mobile communications (global System for mobile communications, GSM), a general packet radio service (general packet radio Service, GPRS), and a universal mobile telecommunications system (universal mobile telecommunications system, UMTS).

In some specific implementation scenarios, the first node may be referred to as a G node, a control node, or an access point (access point). The second node may be referred to as a T node or a terminal node.

It should be understood that a quantity, locations, and connection relationships of nodes shown in accompanying drawings in embodiments of this application are a possible case for ease of description, and are not intended to limit a specific communication system and a specific communication scenario.

Various types of interference exist in a wireless communication environment. Therefore, the communication system needs to have an anti-interference capability. For example, as shown in FIG. 3, if a current operating frequency number of the first node 301 and the second node 302 is a frequency number 1, when interference exists or interference is severe at the frequency number 1, the operating frequency number may be switched to suppress impact of the interference. For example, the first node 301 may switch the operating frequency number to a frequency number 2.

When the first node 301 switches the frequency number, the first node 301 needs to notify another node (for example, the second node 302) communicating with the first node 301 of operating frequency number switching, so that the second node 302 performs a related operation to maintain a communication status. A frequency number switching process has a high time requirement. If an interval from time at which it is determined to switch a frequency number to time at which the frequency number is actually switched is long, another communication system may preempt a frequency number. Transmission performance is affected.

In view of this, a communication method and a related apparatus provided in embodiments of this application can be used to shorten duration of frequency number switching and improve transmission performance of an inter-node communication network.

In a possible implementation, when switching a frequency number, a first node notifies, by using physical layer control signaling indicating frequency number switching, a second node of operating frequency number switching, where the physical layer control signaling indicating frequency number switching is scrambled by using a first identifier to distinguish the physical layer control signaling from physical layer signaling of another function. In the foregoing implementation, an indication of operating frequency number switching is completed by using the first identifier and the physical layer control signaling. This shortens duration of frequency number switching, so that the first node and the second node can switch to a second frequency number as soon as possible to perform communication. This improves transmission performance of the communication network.

It should be understood that the first identifier may be configured on the second node by using signaling (for example, higher layer signaling). Alternatively, the first identifier may be obtained by the first node and the second node in advance. For example, the first identifier is specified in a protocol, or is pre-configured in the second node.

The following describes in detail the method in embodiments of this application.

FIG. 4 is a schematic flowchart of a communication method according to an embodiment of this application. Optionally, the method may be implemented based on the communication system shown in FIG. 3.

The communication method shown in FIG. 4 may include one or more of step S401 to step S403. It should be understood that for ease of description in this application, a sequence of S401 to S403 is used for description, but this is not intended to limit execution necessarily performed in the foregoing sequence. An execution sequence, execution time, a quantity of execution times, and the like of the foregoing one or more steps are not limited in embodiments of this application. Step S401 to step S403 are specifically as follows.

Step S401: A first node sends higher layer signaling, where the higher layer signaling includes a first identifier.

Optionally, a node receiving the higher layer signaling may include a second node. Descriptions are provided in this application by using an example in which a receiving end is the second node. There may be one or more second nodes. That is, the second node receives the higher layer signaling from the first node.

The higher layer signaling includes but is not limited to X resource control (X resource control, XRC) signaling, or a system message. An X resource includes but is not limited to a radio resource. Optionally, the XRC signaling includes XRC setup signaling, XRC reconfiguration signaling, and the like. X resource control may also be referred to as radio resource control.

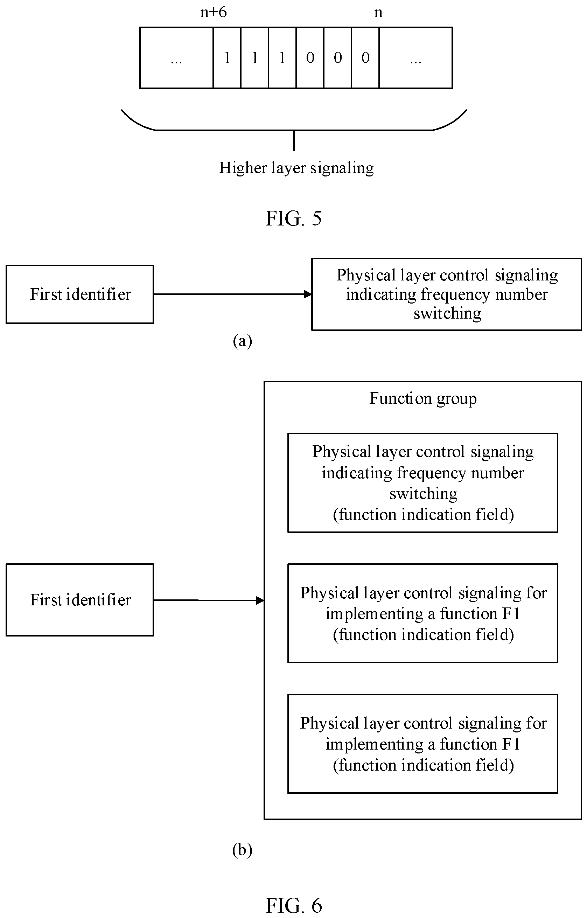

For example, the first identifier includes information about a plurality of bits. A quantity of bits and locations of the bits in the higher layer signaling are not strictly limited in embodiments of this application. FIG. 5 is a diagram of a possible first identifier according to an embodiment of this application. The first identifier includes a signal of six bits (which is merely an example), and is located in an n^{th} bit to an (n+6)^{th} bit in higher layer signaling. For example, the first identifier is "111000", where a value of each bit is merely an example.

In some scenarios, the first identifier may also be referred to as an identifier of frequency number switching.

In a possible implementation, the first identifier corresponds to a frequency number switching function.

FIG. 6 shows correspondences between a first identifier and a function according to an embodiment of this application. In a possible implementation, the first identifier may be used to distinguish physical layer control signaling indicating frequency number switching, as shown in (a) in FIG. 6. For example, some or all information bits in the physical layer control signaling indicating frequency number switching may be scrambled by using the first identifier. After the second node receives control signaling, if the control signaling can be descrambled by using the first identifier, the signaling is the physical layer control signaling indicating frequency number switching.

In another possible implementation, the first identifier corresponds to a group of signaling function types, the group of signaling function types is referred to as a function group, and the function group includes physical layer control signaling of one or more function types. The physical layer control signaling indicating frequency number switching belongs to signaling in the function group. For example, as shown in (b) in FIG. 6, a function group corresponding to a first identifier includes physical layer control signaling indicating frequency number switching, physical layer control signaling for implementing a function F1, and physical layer control signaling for implementing a function F2. In this case, the physical layer control signaling further includes a function indication field, and a function of signaling is jointly indicated by using the first identifier and the function indication field.

It should be noted herein that the higher layer signaling may be sent when an operating frequency number is a first frequency number. Certainly, the higher layer signaling may be sent when an operating frequency number is not a first frequency number. For example, frequency number switching may be performed after the higher layer signaling is sent. In this case, the operating frequency number for sending the higher layer signaling may be another frequency number.

Optionally, the first node may send the higher layer signaling in a broadcast, multicast, or unicast manner. In the broadcast manner, the higher layer signaling may be sent to all nodes (or all nodes within a specific range) in the broadcast manner. In the multicast manner, the higher layer signaling may be sent to a group of nodes in the multicast manner. In the unicast manner, the higher layer signaling is sent to one node in the unicast manner.

In a possible implementation, broadcast, multicast, and unicast may be implemented based on a destination address of signaling. In the broadcast manner, the destination address of the signaling is a broadcast address. In the multicast manner, the destination address of the signaling is a multicast address. In the unicast manner, the destination address of the signaling is an address of the receiving end, for example, an internet protocol (Internet Protocol, IP) address of the receiving end and/or a media access control (Media Access Control, MAC) address of the second node.

In another possible implementation, broadcast, multicast, and unicast may be implemented through a channel for sending signaling. For example, in the broadcast manner, the channel for sending the signaling is a broadcast channel. In the multicast manner, the channel for sending the signaling is a channel for communication between a group of nodes. Optional signaling is distinguished by using an identifier (or a key or an encoding/decoding manner). In the unicast manner, the channel for sending the signaling is a channel between two nodes in point-to-point communication. Optional signaling is distinguished by using an identifier (or a key or an encoding/decoding manner).

The foregoing two implementations are examples for implementation. Manners of implementing broadcast, multicast, and unicast are not strictly limited in this application, and another implementation may be included in a specific implementation process.

Step S402: The first node sends first physical layer control signaling at the operating frequency number.

Optionally, the node receiving the first physical layer control information may include the second node. Descriptions are provided below by using an example in which the receiving end is the second node. That is, the second node receives the first physical layer control signaling.

For ease of description, when the first physical layer control signaling is sent, the operating frequency number of the first node is referred to as the first frequency number.

In some scenarios, the physical layer control signaling is also referred to as physical layer control information, or referred to as frequency number switching physical layer control signaling. It should be understood that names of signaling, information, and fields are not limited in embodiments of this application, and are merely examples for description and representation. The names of the signaling, the information, and the fields in this application may be randomly replaced.

The first physical layer control signaling indicates switching of the operating frequency number to a second frequency number. For example, the first physical layer control signaling includes a destination frequency number field, and a value of the destination frequency number field is an identifier of the second frequency number or includes an identifier of the second frequency number. For another example, the first physical layer control signaling includes an identifier of the second frequency number and an indication of a frequency number switching moment. For another example, the first physical layer control signaling corresponds to the frequency number switching function, and the first physical layer control signaling includes an identifier of the second frequency number.

Optionally, the first physical layer control signaling indicates switching of the operating frequency number of the first node to the second frequency number. In a possible solution, the first physical layer control signaling is used to notify the second node of operating frequency number switching of the first node. In this case, the second node may switch an operating frequency number to the second frequency number to communicate with the first node. Alternatively, the second node may not switch an operating frequency number. For example, if a task of the second node on the first node has been completed, the second node does not need to maintain a communication connection state with the first node.

Alternatively, optionally, the first physical layer control signaling indicates the second node (namely, the node receiving the first physical layer control signaling) to switch the operating frequency number to the second frequency number. Correspondingly, the second node receives the first physical layer control signaling, and switches the operating frequency number to the second frequency number.

It should be understood that the foregoing cases may be combined. An indication for switching the operating frequency number of the first node to the second frequency number may also be considered as an indication for switching the operating frequency number of the second node. That is, the first physical layer control signaling indicates switching of the operating frequency number of the first node to the second frequency number, and also indicates switching of the operating frequency number of the second node to the second frequency number.

Some or all information bits in the first physical layer control signaling are scrambled by using the first identifier. If the second node can descramble the first physical layer control signaling by using the first identifier, the second node may obtain a function of the first physical layer control signaling, and obtain data content of the first physical layer control signaling based on a data format of the first physical layer control signaling; and therefore receive an indication of operating frequency number switching.

In a possible implementation, after detecting physical layer control signaling, the second node may descramble some or all information bits in the physical layer control signaling. If scrambling and descrambling are successfully performed by using the first identifier, it is determined that the physical layer control signaling is the physical layer control signaling indicating frequency number switching, so that corresponding information can be extracted based on a format of the frequency number switching physical layer control signaling.

Optionally, the foregoing descrambling process may be performed after the first physical layer control signaling is decoded. Because the first identifier is used in a scrambling process of signaling, a used decoding manner of the first physical layer control signaling may be the same as an encoding/decoding manner of other signaling. This setting can further shorten, without prolonging decoding time of the second node, time for frequency number switching.

In a possible implementation, a cyclic redundancy check (Cyclic Redundancy Check, CRC) code in the first physical layer control signaling is scrambled by using an identifier corresponding to frequency number switching. In the foregoing implementation, after decoding the physical layer control signaling, the second node separately performs CRC check on decoded physical layer control signaling by using one or more configured scrambling codes. If CRC check performed by using the identifier corresponding to frequency number switching as the scrambling code succeeds, it is determined that the physical layer control signaling is the frequency number switching physical layer control signaling.

The following describes information included in the first physical layer control signaling. In a possible implementation, the first physical layer control signaling includes one or more of the following information: an identifier of the second frequency number, an indication of a frequency number switching moment, a re-access indication, a switching interval indication, a preamble indication, a function indication field, a superframe sequence number continuity indication, and the like. The following describes the foregoing information by using examples.
(1) Identifier of the second frequency number: The identifier of the second frequency number indicates a destination frequency number for switching, and includes but is not limited to a frequency number sequence number, an index number of the frequency number, a channel number, a center frequency of a frequency band corresponding to the frequency number, a start frequency of a frequency band corresponding to the frequency number, or an end frequency of a frequency band corresponding to the frequency number.
   The frequency number shown in FIG. 2 is used as an example. If the second frequency number is the frequency number 2, the identifier of the second frequency number includes a channel number of the frequency number 2, an index number of the frequency number 2, a center frequency of the frequency number 2, or the like.
(2) Indication of the switching moment, or referred to as switching moment information: The indication of the switching moment indicates an occasion (a moment) for switching the operating frequency number.

For ease of description, in various embodiments of this application, a last superframe for transmission at the first frequency number before the operating frequency number of the first node is switched from the first frequency number to the second frequency number is referred to as a first superframe, and a first superframe for transmission at the second frequency number after the operating frequency number of the first node is switched from the first frequency number to the second frequency number is referred to as a second superframe, where "transmission" may be specifically transmission of data and/or signaling.

In a possible implementation, the indication of the frequency number switching moment indicates a moment at which operating frequency number switching starts, for example, indicates a superframe sequence number of a first superframe, or indicates an offset of a first superframe relative to a superframe for sending the first physical layer control signaling.

In another possible implementation, the indication of the frequency number switching moment indicates a start moment at which transmission starts at the second frequency number, for example, indicates a superframe sequence number of a second superframe, or indicates an offset of a second superframe relative to a start moment of a superframe for sending the first frequency number switching physical layer control signaling.

Optionally, the offset in the foregoing manner may be in a unit of a superframe, in a unit of a millisecond (ms), or in a unit of a microsecond (µs).

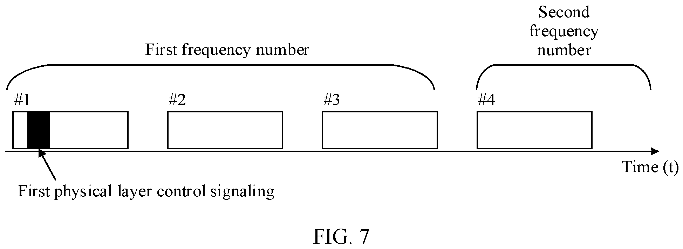

FIG. 7 is a diagram of a plurality of superframes according to an embodiment of this application. A superframe sequence number of a superframe for sending first physical layer control signaling is 1 (which is merely an example), and an occasion for switching an operating frequency number is after a superframe whose superframe sequence number is 3. An indication of a switching moment may be "3" (namely, a superframe sequence number of a first superframe). Alternatively, an indication of a switching moment may be "2" (namely, an offset of a first superframe relative to the superframe for sending the first physical layer control signaling). Alternatively, an indication of a switching moment may be "4" (namely, a superframe sequence number of a second superframe). Alternatively, an indication of a switching moment may be "3" (namely, an offset of a start moment of a second superframe relative to a start moment of the superframe for sending the first frequency number switching physical layer control signaling).

(3) Re-access indication: The re-access indication is indication information indicating whether the second node needs to perform re-access.

In a frequency number switching process, the second node needs to perform the re-access operation in some cases or the second node does not need to perform the re-access operation in some cases. In the foregoing implementation, the re-access indication is carried in the first physical layer control signaling to flexibly regulate and control behavior of the second node. This can improve flexibility and stability of a communication system.

In some possible cases, the re-access indication indicates the second node not to perform the re-access operation. For example, a communication domain system configuration is not changed or changed as little as possible or only a communication domain system configuration (for example, a random access resource pool configuration or a channel sounding reference signal resource pool configuration) that does not affect scheduling of current transmission is changed during frequency number switching. This avoids re-access of the second node, and avoids invalidation of current scheduling. This setting can reduce service interruption caused by frequency number switching and improve transmission performance.

In some possible cases, the first node may adjust a communication system parameter, for example, a cyclic prefix (Cyclic Prefix, CP) length and a resource ratio, based on a channel status of the second frequency number and/or a current service requirement. If the second node re-accesses the first node, it is easier for a change of the communication parameter to take effect, and the first node may indicate the second node to perform re-access.

In a possible implementation, when being a first value, the re-access indication indicates the second node to perform an access operation at the second frequency number. Optionally, when being a second value, the re-access indication indicates the second node to maintain a current access state or not to perform an access operation. The first value and/or the second value may be predefined (for example, specified in a protocol) by a user, a vendor, or a management device, or pre-configured on a node. The management device may be the first node, the second node, or a third-party device.

An access manner may include contention access, contention-free access, or the like. Optionally, the access operation includes sending an access request.

For example, the re-access indication includes one or more bits, and values of the one or more bits indicate whether the second node performs re-access. For example, the re-access indication includes one bit. When being 0, the re-access indication indicates the second node to maintain the current access state or not to perform the re-access operation; or when being 1, the re-access indication indicates the second node to re-access the first node.

Optionally, when performing the access operation, the second node may access the first node, or may access another node. For example, when performing the access operation, the second node re-accesses the first node; and after the second node accesses the first node, the first node and the second node belong to a first communication domain. For another example, after the second node performs the access operation, the second node may access a fourth node; and after the second node accesses the fourth node, the second node and the fourth node belong to a second communication domain.

(4) Switching interval indication: Due to a limit of a capability of a device, a specific time interval is required between ending transmission at a current operating frequency number (for example, the first frequency number) and starting transmission at a next operating frequency number (for example, the second frequency number). Devices with different capabilities have different costs, power consumption, and complexity. Therefore, different devices have different switching capabilities, and shortest time for switching may also be different.

Because operating frequency number switching takes time, there is a specific time interval between superframes for transmitting data and/or signaling, before and after frequency number switching. The switching indication may indicate the interval between ending transmission at the current operating frequency number (for example, the first frequency number) and starting transmission at the next operating frequency number (for example, the second frequency number).

In a possible implementation, the switching interval indicates a time interval between a last superframe (namely, a first superframe) for transmission at the first frequency number and a first superframe (namely, a second superframe) for transmission at the second frequency number. For example, the first node determines the switching interval indication based on device capabilities (a device capability of the first node and/or a device capability of the second node), and sends the switching interval indication to the second node by using the first physical layer control signaling. Correspondingly, the second node can change a communication configuration based on the switching interval indication, to improve communication stability. For example, the second node may determine, based on a time interval, time for starting transmission in a superframe after switching, a location of a synchronization signal, and the like.

Optionally, the switching interval indication may include one or more of the following time intervals: a time interval between an end moment of the first superframe and a start moment of the second superframe, a time interval between a start moment of the first superframe and the start moment of the second superframe, a time interval between the end moment of the first superframe and an end moment of the second superframe, a time interval between a synchronization signal in the first superframe and a synchronization signal in the second superframe, and the like.

In a possible implementation, when the first node sends preamble information at the second frequency number, the switching interval may include one or more of the following: a time interval between an end moment of the first superframe and a start moment of the preamble information, a time interval between a start moment of the first superframe and the start moment of the preamble information, and the like.

In a possible implementation, the switching interval indication further indicates whether the first node sends preamble information at the second frequency number. Correspondingly, the second node determines, based on the switching interval indication, whether the first node sends the preamble information at the second frequency number.

Further, if the switching interval indicates that the first node sends the preamble information at the second frequency number, the second node correspondingly receives the preamble information at the second frequency number; or if the switching interval indicates that the first node does not send the preamble information at the second frequency number, the second node does not need to receive the preamble information at the second frequency number. It can be learned that the switching interval indication can be used to flexibly regulate and control behavior of the second node. This can improve stability of a communication system.

In a possible design, when the switching interval indication is greater than a third value, the first node sends, at an operating frequency number (namely, the second frequency number) after switching, the preamble information to at least one second node. The third value may be predefined (for example, specified in a protocol) by a user, a vendor, or a management device, or pre-configured on a node. The management device may be the first node, the second node, or a third-party device. Alternatively, optionally, when the switching interval indication is less than a third value, the first node does not send preamble information at the second frequency number. It should be understood that when the switching interval is equal to a third value, the first node may not send preamble information at the second frequency number or not send preamble information.

For example, the switching interval indication indicates a quantity of milliseconds in an interval between an end moment of a first superframe and a start moment of a second superframe. When the switching interval indication is greater than 1 (that is, the interval between the end moment of the first superframe and the start moment of the second superframe is 1 ms), the first node sends the preamble information at the second frequency number. Correspondingly, when the interval indicated by the switching interval is less than, or less than or equal to 1, the first node does not send the preamble information at the second frequency number.

In another possible design, when the switching interval indication is 0, the preamble information is not sent; or when the switching interval indication is greater than 0, the preamble information is sent.

When the first node does not send the preamble information, the first node and the second node may perform communication in a superframe as soon as possible. This shortens the interval between the last superframe before switching and the first superframe after switching, and reduces duration of switching.

In a possible implementation, the switching interval indicates a time interval between a start moment of the first superframe and a start moment of the second superframe, the switching interval indicates N milliseconds, N is an integer, and N≥0.

Optionally, the first node determines, based on a frequency number switching capability of the first node and/or a frequency number switching capability of the second node, duration for frequency number switching. The time interval indicated by the switching interval indication is greater than the duration for frequency number switching.

In a possible design, the first node rounds the duration for frequency number switching, to obtain the switching interval indication. Optionally, a rounding manner may be rounding up or another rounding manner.

It should be understood that a switching interval indication field may not be included in the first physical layer control signaling. For example, the switching interval may be specified in a protocol, pre-configured in the first node and/or the second node, or indicated by using other higher layer signaling.

(5) Preamble indication: The preamble indication indicates that the first node sends the preamble information at the second frequency number, or indicates that the first node does not send the preamble information at the second frequency number.

Optionally, when the preamble indication is a fourth value, the first node sends preamble information at the second frequency number. Alternatively, when the preamble indication is a fifth value, the first node does not send preamble information at the second frequency number. The fourth value and/or the fifth value may be predefined (for example, specified in a protocol) by a user, a vendor, or a management device, or pre-configured on a node. The management device may be the first node, the second node, or a third-party device.

For example, the preamble indication includes information of one or more bits, and values of the one or more bits indicate whether the first node sends the preamble information at the second frequency number. For example, the preamble indication includes one bit. When being 0, the preamble indication indicates that the first node does not send the preamble information at the second frequency number, or when being 1, the preamble indication indicates that the first node sends the preamble information at the second frequency number.

In a possible implementation, when the switching interval indication indicates whether preamble information is sent, the first physical layer control signaling may not carry the preamble indication. This setting can reduce fields of the physical layer control signaling, and improve extensibility.

(6) Function indication field: The function indication field indicates a function of the signaling, or jointly indicates a function of the signaling with the first identifier.

In a possible implementation, the first identifier corresponds to one or more functions, and the function indication field indicates that the first identifier corresponds to the frequency number switching function. For ease of understanding, Table 1 lists an example of values of several function indication fields and descriptions. With reference to (b) in FIG. 6, a first identifier indicates a plurality of functions, including a frequency number switching function, a function F1, and a function F2. When a function indication field in signaling is 00, the first identifier indicates the frequency number switching function. Similarly, when a function indication field in the signaling is 01, the first identifier indicates the function F1 (an example of a function name); and when a function indication field in the signaling is 10, the first identifier indicates the function F2 (an example of a function name).

**Table 1 Values of function indication fields and descriptions**

| Value of the function indication field | Description |
|---|---|
| 00 | Frequency number switching function |
| 01 | Function F1 |
| 10 | Function F2 |
| 11 | Reserved (reserved) field |

It should be understood that the foregoing is intended to facilitate understanding of values of some provided possible function indication fields, and is not intended to limit the function indication fields. In a specific implementation process, the function indication field may include more or fewer bits, and there may be another design for a correspondence between a value of a function indication field and a function.

(7) Superframe sequence number continuity indication: The superframe sequence number continuity indication indicates whether it is ensured that superframe sequence numbers of a first superframe and a second superframe are consecutive.

Optionally, when being a sixth value, the superframe continuity indication indicates that it is not ensured that a superframe sequence number of a last superframe before operating frequency number switching and a superframe sequence number of a first superframe after operating frequency number switching are consecutive; or when being a seventh value, the superframe continuity indication indicates that a superframe sequence number of a last superframe before operating frequency number switching and a superframe sequence number of a first superframe after operating frequency number switching are consecutive.

In a possible design, when it is not ensured that the superframe sequence numbers are consecutive, scheduling performed before operating frequency number switching is invalid at the second frequency number, and the first node needs to determine scheduling again. Alternatively, when the superframe sequence numbers are consecutive, scheduling performed before operating frequency number switching is valid at the second frequency number, and in this case, the first node does not need to perform scheduling again. This shortens duration of switching.

For example, the superframe sequence number continuity indication includes information of one bit. When being 1, the superframe sequence number continuity indication indicates that the superframe sequence numbers of the first superframe and the second superframe are consecutive; or when being 0, the superframe sequence number continuity indication indicates that it is not ensured that the superframe sequence numbers of the first superframe and the second superframe are consecutive.

The sixth value and/or the seventh value may be predefined (for example, specified in a protocol) by a user, a vendor, or a management device, or pre-configured on a node. The management device may be the first node, the second node, or a third-party device.

The foregoing describes a function of and information included in the first physical layer control signaling. The following describes an example of a manner of sending the first physical layer control signaling.

In a possible implementation, a resource for sending the first physical layer control signaling belongs to a pre-configured physical layer control signaling common resource. A physical layer control signaling common resource (a common resource for short) is a resource that can be shared by a plurality of second nodes for detecting physical layer control signaling, and includes but is not limited to a time-frequency resource. The second node detects (or listens to) the signaling on the common resource, so that a node for which the common resource is configured can receive the first physical layer control signaling. Therefore, the first node does not need to notify other nodes one by one of frequency number switching. This shortens duration of frequency number switching.

In consideration of a possible case, there may be a plurality of second nodes. For example, in a SparkLink basic (SparkLink Basic, SLB) technology, one communication domain may include 4096 second nodes. In this case, it is time-consuming for the first node to notify the second nodes one by one of operating frequency number switching. Due to time-consuming notifications, an interval from time at which the second node determines to switch the frequency number to a switching moment is long. As a result, the first node cannot switch to a new operating frequency number as soon as possible. Transmission performance is affected. In the foregoing implementation, the first physical layer control signaling is sent on the common resource. The second node may detect the first physical layer control signaling on the common resource, and obtain the operating frequency number switching indication in time, so that the first node and the second node can perform communication at the new operating frequency number as soon as possible. This improves an anti-interference capability of the communication system, and improves transmission performance.

In a possible implementation, the first node may send physical layer control signaling for a plurality of times to indicate same frequency number switching. The first node repeatedly sends, for a plurality of times, signaling indicating same frequency number switching, so that the second node has an opportunity to detect the signaling for a plurality of times. This reduces a probability of a frequency number switching failure because the second node does not detect the signaling.

Optionally, physical layer control signaling indicating same frequency number switching may be separately sent in a plurality of superframes. For example, the first physical layer control signaling is sent in a third superframe. In this case, the first node further sends third physical layer control signaling in a fourth superframe at an operating frequency number (a current operating frequency number is the first frequency number), where some or all information bits in the third physical layer control signaling are scrambled by using the first identifier, and the third physical layer control signaling indicates switching of the operating frequency number of the first node to the second frequency number.

It should be understood that some or all information in the physical layer control signaling indicating the same frequency number switching is the same. For example, when an indication of a switching moment is an offset of the switching moment relative to a moment (or a superframe) at which physical layer control signaling is sent, values of indications of the switching moments in a plurality of pieces of physical layer control signaling indicating same frequency number switching may be different.

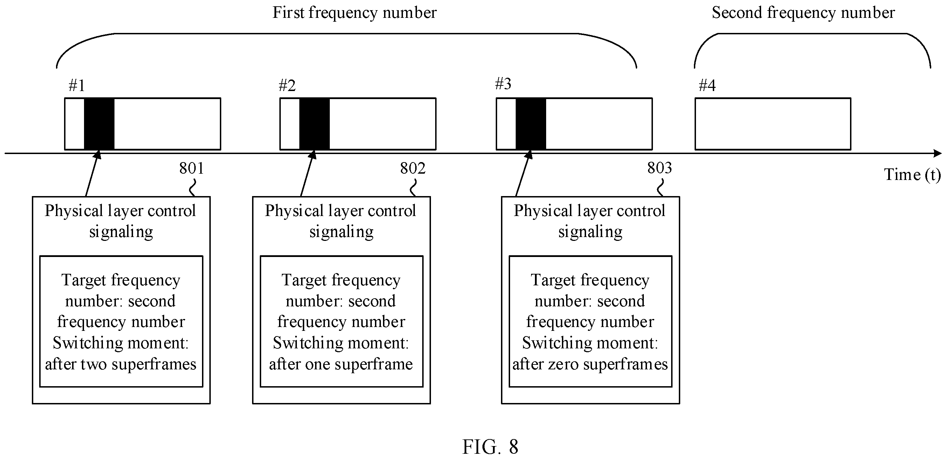

FIG. 8 is another diagram of a plurality of superframes according to an embodiment of this application. A superframe whose superframe sequence number is "1" carries physical layer control signaling 801. The physical layer control signaling 801 indicates switching of an operating frequency number to a second frequency number, the physical layer control signaling 801 includes an indication of a switching moment, and the indication of the switching moment indicates an offset between a start moment of a first superframe used by the first node for transmission at the second frequency number and a start moment of a superframe for sending the first frequency number switching physical layer control signaling, that is, the indication of the switching moment is "2". A superframe whose superframe sequence number is "2" carries physical layer control signaling 802. Content (related to frequency number switching) indicated by the physical layer control signaling 802 is the same as content indicated by the physical layer control signaling 801. Similarly, a superframe whose superframe sequence number is "3" carries physical layer control signaling 803. Content indicated by the physical layer control signaling 803 is the same as the content indicated by the physical layer control signaling 801 and the content indicated by the physical layer control signaling 802.

When a first node sends, in the superframe 1, the superframe 2, and the superframe 3, for a plurality of times, physical layer control signaling for executing same frequency number switching, a second node may obtain a frequency number switching indication by detecting any one piece of the physical layer control signaling. Therefore, the foregoing implementation can be used to increase a probability of successful frequency number switching, so that the second node can continue to communicate with the first node. This can improve transmission performance.

Alternatively, optionally, the first node may send a plurality of pieces of physical layer control signaling in one superframe, where the plurality of pieces of physical layer control signaling indicate same frequency number switching.

In a possible implementation, a bit length of physical layer control signaling indicating frequency number switching is the same as a length of another type of physical layer control signaling indicating another function. In other words, a bit length of physical layer control signaling indicating frequency number switching belongs to an existing bit length.

When information bit lengths of control signaling are the same, encoding/decoding manners of the control signaling are also the same. This setting can further shorten, without prolonging decoding time at the receiving end, the time for frequency number switching; and does not significantly increase, when the receiving end needs to additionally blindly detect physical layer signaling for carrier switching, complexity of blindly detecting the physical layer signaling by the receiving end.

For example, the first physical layer control signaling is used as an example, a length of the first physical layer control signaling is the same as a bit length of fourth physical layer control signaling. A function of the first physical layer control signaling is different from a function of the fourth physical layer control signaling. In this setting, the first physical layer control signaling and the fourth physical layer control signaling may use a same encoding/decoding manner.

In a possible implementation, the second node does not send feedback indicating whether the first physical layer control signaling is successfully detected. Reducing signaling interaction can further shorten duration of frequency time switching. Optionally, if the second node fails to receive the frequency number switching indication, the second node may re-perform the operation of accessing the first node, to communicate with the first node at the second frequency number.

Similarly, when the first node sends second physical layer control signaling, the second node does not send feedback indicating whether the second physical layer control signaling is successfully detected. This reduces signaling interaction.

In a possible implementation, the first node may receive frequency number capability information sent by the second node, where the frequency number capability information includes one or more of a supported frequency number, a supported switching interval, and the like.

For example, the second frequency number belongs to a frequency number supported by the second node.

For example, the first node may flexibly configure a switching interval based on the frequency number capability information, so that the switching interval can match switching capabilities of the first node and the second node, shorten the switching interval as much as possible, and reduce an extra delay caused by frequency number switching.

Optionally, at a moment after the first physical layer control signaling is sent, the second node may switch the operating frequency number to the second frequency number, and receive or send a signal at the second frequency number. That is, the embodiment shown in FIG. 4 further includes step S403, which is specifically as follows:

Step S403 (optional): The first node performs communication at the second frequency number.

Specifically, the first node may communicate with the at least one second node at the second frequency number. For example, the first node sends data and/or signaling at the second frequency number. For another example, the first node receives data and/or signaling at the second frequency number.

In a possible implementation, the first node may switch the operating frequency number at the frequency number switching moment. After the frequency number switching moment, the first node communicates with the at least one second node at the second frequency number. The frequency number switching moment is a moment indicated by the indication of the frequency number switching moment in the first physical layer control signaling.

Correspondingly, the second node switches the operating frequency number to the second frequency number at the frequency number switching moment based on the indication of the frequency number switching moment. After the frequency number switching moment, the second node communicates with the first node at the second frequency number.

In a possible implementation, the first node sends preamble information to the second node at the second frequency number. Correspondingly, the second node receives the preamble information from the first node.

In a possible implementation, the first physical layer control signaling indicates the second node to perform a re-access operation, and the second node sends an access request to the first node to re-access the first node.

In a possible implementation, before and after operating frequency number switching, superframe sequence numbers of superframes used by the first node for transmission are consecutive. That is, superframe sequence numbers of a first superframe and a second superframe are consecutive. For example, as shown in FIG. 7 and FIG. 8, a superframe sequence number of a last superframe used by the first node for transmission at the first frequency number is 3, a superframe sequence number of a last superframe for transmission at the second frequency number is 4, and frame numbers of the two superframes are consecutive. It should be noted that because a quantity of bits of a superframe sequence number is usually limited, a new round of counting period may start when a count value of the superframe sequence number reaches a maximum value. This phenomenon is referred to as frame number rollover. When frame number rollover occurs, superframe sequence numbers before and after frame number rollover are also considered as consecutive superframe sequence numbers.

Superframe sequence numbers corresponding to operating frequency number switching are consecutive, which ensures that transmission is logically consecutive. Therefore, scheduling before operating frequency number switching can continue to be used after operating frequency number switching, without rescheduling. This greatly reduces impact of operating frequency number switching on a communication process, and improves transmission performance.

Scheduling includes resource allocation in frequency domain, resource allocation in time domain, or the like. For example, a first node sends scheduling signaling in an N^{th} superframe, and scheduling indicated by the scheduling signaling takes effect in an (N+1)^{th} superframe. If superframe numbers are consecutive, scheduling signaling sent in a last superframe before operating frequency number switching may continue to take effect in a first superframe after frequency number switching, and scheduling signaling does not need to be sent again.

In a possible implementation, an interval between an end moment of the first superframe and a start moment of the second superframe is N milliseconds, N is an integer, and N≥0.

Optionally, a length of a superframe is 1 ms. A location of a synchronization signal is usually at a fixed time location in the superframe, so that a period of the synchronization signal is the same as the length of the superframe. That is, a period of the synchronization signal is 1 ms.

In the foregoing implementation, an interval between a start moment of the first superframe and the start moment of the second superframe is 0 milliseconds or a positive integer number of milliseconds. This setting can ensure that a superframe boundary and a location of a synchronization signal do not change in an operating frequency number switching process, reduce changes of configuration parameters of a device, and make implementation of timing synchronization between the first node and the second node simpler.

In some scenarios, step S403 is optional. To be specific, the first node may transmit the data and/or signaling at the second frequency number, or may not transmit the data and/or signaling at the second frequency number. For example, the first node may have a fault (for example, power-off) after sending the first physical layer control signaling, and does not perform data transmission at the second frequency number in this case. For another example, when the first node does not switch to the second frequency number after sending the first physical layer control signaling, because the second frequency number is preempted, in this case, the first node needs to re-determine a destination frequency number for switching. For another example, before switching to the second frequency number, the first node detects a frequency number more appropriate for communication as the destination frequency number for switching.

In a possible implementation, the first identifier may be used in a plurality of frequency number switching processes. That is, after the first node sends the first identifier to the second node, in the subsequent plurality of operating frequency number switching processes, signaling indicating frequency number switching may be scrambled by using the same first identifier. Therefore, after the first identifier is configured by using the higher layer signaling, frequency number switching may be indicated by using physical layer control signaling once. This further reduces signaling interaction in the frequency number switching process, and further shortens duration of frequency number switching, so that the first node can switch to the second frequency number as soon as possible for communication. This improves transmission performance of the communication network.

For example, after switching the operating frequency number to the second frequency number, the first node may further switch the frequency number to a third frequency number. Specifically, the first node sends the second physical layer control signaling at the operating frequency number (namely, the second frequency number), where the second physical layer control signaling indicates switching of the operating frequency number to the third frequency number, and the some or all information bits in the second physical layer control signaling are scrambled by using the first identifier. In the foregoing implementation, when switching the operating frequency number to the third frequency number, the first node may indicate, by using physical layer control signaling once, frequency number switching. This shortens duration of frequency number switching, and improves transmission performance of the communication network.

In the embodiment shown in FIG. 4, the first node configures the first identifier for the second node by using the higher layer signaling. When switching the frequency number, the first node scrambles, by using the first identifier, the physical layer control signaling indicating frequency number switching, and completes the indication of operating frequency number switching by using the first identifier and the physical layer control signaling. This shortens duration of frequency number switching, so that the first node can switch to the second frequency number as soon as possible for communication, and improves transmission performance of the communication network.

In the embodiment shown in FIG. 4, there are a plurality of possible designs for information in the first physical layer control signaling. For ease of understanding, Table 2 shows an example format of information in possible first physical layer control signaling according to an embodiment of this application.

**Table 2 Fields included in the first physical layer control signaling and descriptions**

| Field name | Length | Description |
|---|---|---|
| Function indication | 4 bits | Indicates a function of the signaling, where a value 0 indicates that the current signaling is physical layer control signaling indicating frequency number switching, and other values are reserved. |
| Identifier of a second frequency number | 14 bits | Indicates a channel number of a destination frequency number for switching. |
| Indication of a switching moment | 6 bits | Indicates an offset between a superframe for sending the current physical layer control signaling and a last superframe at the current operating frequency number, where a unit is a superframe, and a value 0 indicates that the superframe for sending the current physical layer control signaling is the last superframe at the current operating frequency number. |
| Switching interval indication | 4 bits | A unit is a millisecond. |
| Re-access indication | 1 bit | A value 0 indicates that a T node does not need to perform re-access on a destination carrier, or a value 1 indicates that a T node needs to perform non-contention access on the destination carrier by using a currently allocated physical layer identifier. |
| Preamble indication | 1 bit | A value 0 indicates that a first node does not send preamble information before a first superframe at a destination frequency number after switching to the destination frequency number, or a value 1 indicates that a first node sends preamble information before the first superframe at a destination carrier after switching to the destination frequency number. |
| Superframe sequence number continuity indication | 1 bit | A value 1 indicates that a superframe number of a last superframe before the operating frequency number is switched and a superframe number of a first superframe after the operating frequency number is switched are consecutive, or a value 0 indicates that it is not ensured that a superframe number of a last superframe before the operating frequency number is switched and a superframe number of a first superframe after the operating frequency number is switched are consecutive. |
| Cyclic redundancy check code | 24 bits | Indicates a cyclic redundancy check sequence. |

In the embodiment shown in FIG. 4, a solution of configuring the first identifier by using the higher layer signaling is described. In a specific implementation process, the first identifier may alternatively be predefined (for example, specified in a protocol) or pre-configured in the first node and the second node. The following describes an implementation solution in which the first node and the second node obtain the first identifier in advance. For related concepts, operations, or logical relationships that are not explained below, refer to corresponding descriptions in the embodiment shown in FIG. 4.

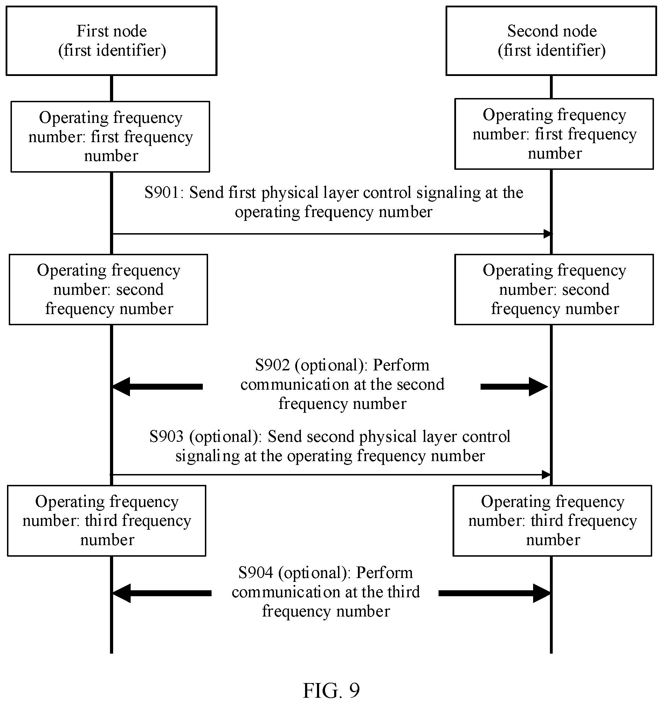

FIG. 9 is a schematic flowchart of a communication method according to an embodiment of this application. Optionally, the method may be implemented based on the communication system shown in FIG. 3. The communication method shown in FIG. 9 may include one or more of step S901 to step S904. Step S901 to step S904 are specifically as follows.

Step S901: A first node sends first physical layer control signaling at an operating frequency number.

The operating frequency number is a first frequency number. Correspondingly, a second node receives the first physical layer control signaling at the operating frequency number.

The first node obtains a first identifier in advance, and some or all information bits in the first physical layer control signaling are scrambled by using the first identifier. If the second node also obtains the first identifier in advance, the second node can descramble the first physical layer control signaling by using the first identifier, that is, obtain a function of the first physical layer control signaling, and obtain data content of the first physical layer control signaling based on a data format of the first physical layer control signaling; and therefore receive an indication of operating frequency number switching.

For detailed descriptions, refer to descriptions in step S402.

Step S902 (optional): The first node communicates with the second node at a second frequency number.

Correspondingly, the second node communicates with the first node at the second frequency number.

For example, the first node sends data and/or signaling to the second node at the second frequency number. For another example, the first node receives, at the second frequency number, data and/or signaling from the second node.

For detailed descriptions, refer to descriptions in step S403.

It should be understood that the first identifier may be used in a plurality of frequency number switching processes. That is, the communication method shown in FIG. 9 further includes step S903.

Step S903 (optional): The first node sends second physical layer control signaling at an operating frequency number.

The operating frequency number is the second frequency number. Correspondingly, the second node receives the second physical layer control signaling at the operating frequency number.

The second physical layer control signaling indicates switching of the operating frequency number to a third frequency number, and some or all information bits in the second physical layer control signaling are scrambled by using the first identifier.

For information included in the third physical layer control signaling, a sending manner, actual sending, and the like, refer to related descriptions of the second physical layer control signaling in step S402.

In some scenarios, step S903 is included in step S902.

Step S904 (optional): The first node communicates with the second node at the third frequency number.

Correspondingly, the second node communicates with the first node at the third frequency number.

For example, the first node sends data and/or signaling to the second node at the third frequency number. For another example, the first node receives, at the third frequency number, data and/or signaling from the second node.

In the embodiment shown in FIG. 9, the first node and the second node obtain the first identifier in advance. When switching the frequency number, the first node scrambles, by using the first identifier, the physical layer control signaling indicating frequency number switching, and completes the indication of operating frequency number switching by using the first identifier and the physical layer control signaling. This shortens duration of frequency number switching, so that the first node can switch to the second frequency number as soon as possible for communication. This improves transmission performance of a communication network.

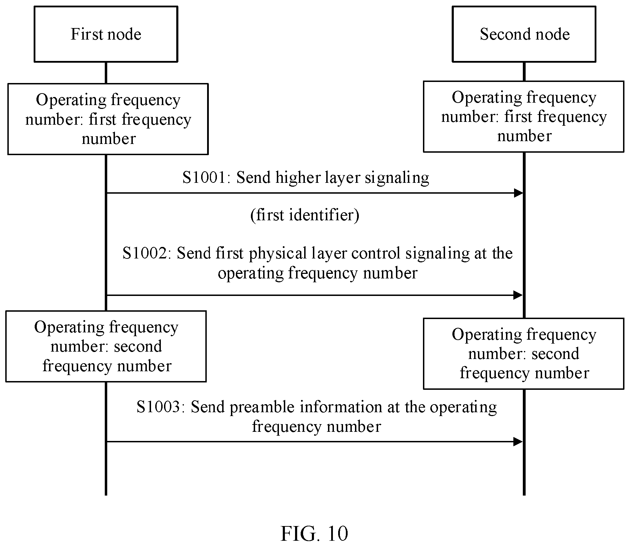

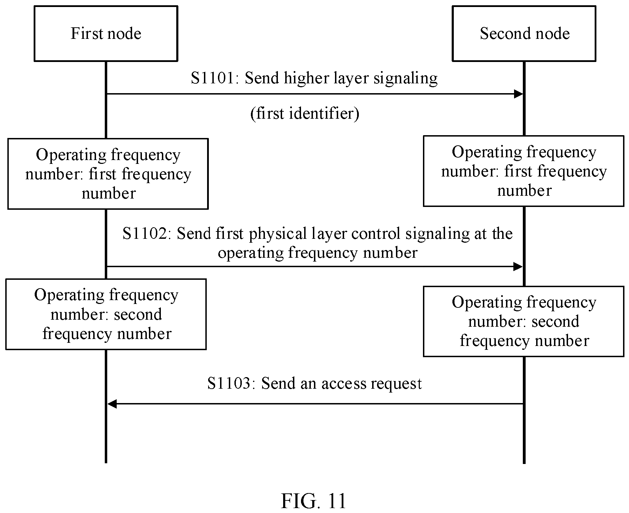

The method embodiment shown in FIG. 4 includes many possible implementation solutions. The following describes some of the implementation solutions by using examples with reference to FIG. 10 and FIG. 11. It should be noted that for related concepts, operations, or logical relationships that are not explained in FIG. 10 and/or FIG. 11, refer to corresponding descriptions in the embodiment shown in FIG. 4.

FIG. 10 is a schematic flowchart of a communication method according to an embodiment of this application. Optionally, the method may be implemented based on the communication system shown in FIG. 3. The communication method shown in FIG. 10 may include step S1001 to step S1003, which are specifically as follows.

Step S1001: A first node sends higher layer signaling. Correspondingly, a second node receives the higher layer signaling.

For detailed descriptions, refer to step S401.

Step S1002: The first node sends first physical layer control signaling at an operating frequency number. Correspondingly, a second node receives the first physical layer control signaling. The operating frequency number is a first frequency number.

Optionally, the first physical layer control signaling includes a preamble indication, and the preamble indication indicates that the first node sends preamble information at a second frequency number.

Alternatively, optionally, the first physical layer control signaling includes a switching interval indication, and the switching interval indication is greater than a third value. When being greater than the third value, the switching interval indication indicates that the first node sends preamble information at the second frequency number.

For detailed descriptions, refer to descriptions in step S402.

Step S1003: The first node sends the preamble information at the operating frequency number. Correspondingly, the second node receives, at the operating frequency number, the preamble information from the first node. The operating frequency number is a second frequency number.

The second node, based on the preamble information, obtains a channel status and implements synchronization with the first node. In addition, the second node may obtain, from the preamble, a change of communication domain configuration information, for example, a change of information such as a random access resource pool configuration or an SRS resource pool configuration. In this setting, the second node does not need to re-access the first node. This avoids interruption of service transmission between the first node and the second node, and improves transmission performance.

In the embodiment shown in FIG. 10, the switching interval indication and/or a preamble indication can be used to flexibly regulate and control an operation of the second node. This improves stability of a communication system and improves transmission performance.

FIG. 11 is a schematic flowchart of a communication method according to an embodiment of this application. Optionally, the method may be implemented based on the communication system shown in FIG. 3. The communication method shown in FIG. 11 may include step S1101 to step S1103, which are specifically as follows.

Step S1101: A first node sends higher layer signaling. Correspondingly, a second node receives the higher layer signaling.

For detailed descriptions, refer to step S401.

Step S1102: The first node sends first physical layer control signaling. Correspondingly, the second node receives the first physical layer control signaling.

Optionally, the first physical layer control signaling includes a re-access indication, and the re-access indication indicates that the first node performs an access operation.

For detailed descriptions, refer to descriptions in step S402.

Step S1103: The second node sends an access request to the first node. Correspondingly, the first node receives the access request from the second node.

Specifically, the second node performs, based on the re-access indication, an operation of re-accessing the first node. Sending the access request is a step in performing the access operation by the second node.

In addition, the embodiment shown in FIG. 11 may be compatible with nodes having different performance. This improves communication stability. For example, for a node with a poor frequency number switching capability, a re-access procedure may be performed to continue communication with the first node.

The foregoing describes in detail the methods in embodiments of this application. The following provides apparatuses in embodiments of this application.

It may be understood that, to implement the functions in the foregoing embodiments of the method, a plurality of apparatuses provided in embodiments of this application, for example, communication apparatuses, include a corresponding hardware structure, software unit, or a combination of a hardware structure and a software structure for performing the functions. A person skilled in the art should be easily aware that, in combination with the examples described in embodiments disclosed in this specification, units, algorithms, and steps may be implemented by hardware or a combination of hardware and computer software in embodiments of this application. Whether a function is performed by hardware or hardware driven by computer software depends on particular applications and design constraints of the technical solutions. A person skilled in the art may implement the foregoing method embodiments by using different apparatus implementations in different use scenarios. It should not be considered that different implementations of the apparatus go beyond the scope of embodiments of this application.

In embodiments of this application, the apparatus may be divided into functional units. For example, the functional units may be obtained through division based on corresponding functions, or two or more functions may be integrated into one functional unit. The integrated module may be implemented in a form of hardware, or may be implemented in a form of a software functional unit. It should be noted that in this embodiment of this application, division into the units is an example, and is merely a logical function division. In actual implementation, another division manner may be used.

The following lists several possible apparatuses.

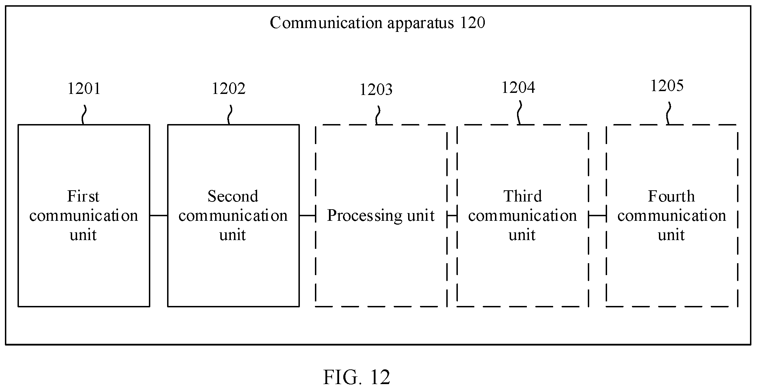

FIG. 12 is a diagram of a structure of a communication apparatus 120 according to an embodiment of this application. Optionally, the communication apparatus 120 may be an independent device, for example, a node. Alternatively, the communication apparatus 120 may be a component in an independent device (for example, a node), for example, a chip or an integrated circuit. The communication apparatus 120 is configured to implement the foregoing communication method, for example, the communication method shown in FIG. 4, FIG. 9, FIG. 10, or FIG. 11.

In a possible design, the communication apparatus 120 is configured to implement the method on a side of the first node in the foregoing communication method.

In another possible implementation, a first communication unit 1201 is configured to send higher layer signaling, and the higher layer signaling includes a first identifier; and
a second communication unit 1202 is configured to send first physical layer control signaling at an operating frequency number, some or all information bits in the first physical layer control signaling are scrambled by using the first identifier, and the operating frequency number is a first frequency number; and the first physical layer control signaling indicates switching of the operating frequency number of the first node to a second frequency number.

In a possible implementation, the first identifier corresponds to a frequency number switching function.

In another possible implementation, the first physical layer control signaling includes a function indication field, and the function indication field indicates that the first identifier corresponds to the frequency number switching function.

In still another possible implementation, the some information bits in the first physical layer control signaling include a cyclic redundancy check CRC code of the first physical layer control signaling.

In still another possible implementation, a resource for sending the first physical layer control signaling belongs to a pre-configured physical layer control signaling common resource.

In still another possible implementation, the communication apparatus 120 further includes a third communication unit 1204, and the third communication unit 1204 is configured to communicate with at least one second node at the second frequency number.

In still another possible implementation, superframe sequence numbers of a first superframe and a second superframe are consecutive; and the first superframe is a last superframe for transmitting data and/or signaling at the first frequency number before the operating frequency number of the first node is switched from the first frequency number to the second frequency number, and the second superframe is a first superframe for transmitting data and/or signaling at the second frequency number after the operating frequency number of the first node is switched from the first frequency number to the second frequency number.

That is, before and after operating frequency number switching, superframe sequence numbers of superframes are consecutive.

In still another possible implementation, an interval between an end moment of the first superframe and a start moment of the second superframe is N milliseconds, N is an integer, and N≥0.

In still another possible implementation, the first physical layer control signaling includes one or more of the following information: an identifier of the second frequency number, an indication of a frequency number switching moment, a re-access indication, a switching interval indication, or a preamble indication.

In still another possible implementation, the first physical layer control signaling includes the identifier of the second frequency number. The identifier of the second frequency number indicates a destination frequency number for switching, and includes but is not limited to a frequency number sequence number, a frequency number index number, or a channel number.

In still another possible implementation, the first physical layer control signaling includes the indication of the frequency number switching moment. The indication of the switching moment indicates an occasion for switching the operating frequency number.

In a possible manner, the indication of the frequency number switching moment indicates a moment at which the first node starts to switch the operating frequency number, for example, indicates a superframe sequence number of a last superframe used by the first node for transmission at the current operating frequency number, or indicates an offset of a last superframe used by the first node for transmission at the current operating frequency number relative to a superframe for sending the first physical layer control signaling.

In another possible manner, the indication of the frequency number switching moment indicates a start moment at which transmission starts at the second frequency number, for example, indicates a superframe sequence number of a first superframe used by the first node for transmission at the second frequency number, or indicates an offset of a start moment of a first superframe used by the first node for transmission at the second frequency number relative to a start moment of a superframe for sending the first physical layer control signaling.

Optionally, the offset in the foregoing manner may be in a unit of a superframe, in a unit of a millisecond (ms), or in a unit of a microsecond (µs).

In still another possible implementation, the first physical layer control signaling includes the re-access indication. The re-access indication is indication information indicating whether the second node needs to perform re-access.

In some possible cases, the re-access indication indicates the second node not to perform the re-access operation. For example, a communication domain system configuration is not changed or changed as little as possible or only a communication domain system configuration (for example, a random access resource pool configuration or a channel sounding reference signal resource pool configuration) that does not affect scheduling of current transmission is changed during frequency number switching. This avoids re-access of the second node, and avoids invalidation of current scheduling.

In still another possible implementation, when being a first value, the re-access indication indicates the second node to perform an access operation at the second frequency number.

In still another possible implementation, when being a second value, the re-access indication indicates the second node to maintain a current access state or not to perform an access operation.

In still another possible implementation, the first physical layer control signaling includes the switching interval indication, and the switching interval indicates a time interval between a first superframe and a second superframe.

Optionally, the switching interval indication may include one or more of the following time intervals:
a time interval between an end moment of the first superframe and a start moment of the second superframe, a time interval between a start moment of the first superframe and the start moment of the second superframe, a time interval between the end moment of the first superframe and an end moment of the second superframe, a time interval between a synchronization signal in the first superframe and a synchronization signal in the second superframe, and the like.

In still another possible implementation, the switching interval indication further indicates whether the communication apparatus sends preamble information at the second frequency number.

In still another possible implementation, the communication apparatus 120 does not send preamble information at the second frequency number. This shortens an interval between a last superframe before switching and a first superframe after switching, and reduces switching time consumed.

In still another possible implementation, the communication apparatus 120 further includes a third communication unit 1204, and the third communication unit 1204 is configured to:
send preamble information at the second frequency number when the switching interval indication is greater than a third value.

Optionally, when the switching interval indication is less than a third value, the communication apparatus 120 does not send preamble information at the second frequency number.

It should be understood that when the switching interval is equal to a third value, the communication apparatus 120 may not send preamble information at the second frequency number or not send preamble information, which is subject to specific implementation.

In still another possible implementation, when the switching interval indication is 0, the communication apparatus 120 does not send preamble information at the second frequency number; or when the switching interval indication is a value greater than 0, the communication apparatus 120 sends preamble information at the second frequency number.

In still another possible implementation, the first physical layer control signaling includes the preamble indication, and the preamble indication indicates that the communication apparatus 120 sends preamble information at the second frequency number, or indicates that the communication apparatus 120 does not send preamble information at the second frequency number.

Optionally, the communication apparatus 120 includes the third communication unit 1204, and the third communication unit 1204 is configured to: send the preamble information at the second frequency number when the preamble indication is a fourth value.

Optionally, when the preamble indication is a fifth value, the communication apparatus 120 does not send the preamble information at the second frequency number.

In still another possible implementation, when the switching interval indicates whether the preamble information is sent, the first physical layer control signaling does not need to carry an additional preamble indication.

In still another possible implementation, the first identifier may be used in a plurality of frequency number switching processes. That is, after the communication apparatus 120 sends the first identifier to a second node, in subsequent plurality of operating frequency number switching processes, signaling indicating frequency number switching may be scrambled by using the same first identifier.

In still another possible implementation, the second communication unit 1202 is further configured to:
send second physical layer control signaling at an operating frequency number, where the second physical layer control signaling indicates switching of the operating frequency number to a third frequency number, some or all information bits in the second physical layer control signaling are scrambled by using the first identifier, and the operating frequency number is the second frequency number.

In still another possible implementation, the communication apparatus 120 further includes a fourth communication unit 1205, and the fourth communication unit 1205 is configured to receive frequency number capability information of at least one second node, where the frequency number capability information includes one or more of a supported frequency number, a supported switching interval, and the like.

Optionally, the second frequency number belongs to a frequency number supported by the second frequency number.

In still another possible implementation, the communication apparatus 120 further includes a processing unit 1203, and the processing unit 1203 is configured to determine a switching interval based on the frequency number capability information reported by the at least one second node.

In still another possible implementation, the first physical layer control signaling is sent in a broadcast and/or multicast manner.

In still another possible implementation, the communication apparatus 120 separately sends a plurality of times of physical layer control signaling in a plurality of superframes to indicate same frequency number switching.

In still another possible implementation, the second communication unit 1202 is further configured to:
send the first physical layer control signaling in a third superframe at the operating frequency number, where the operating frequency number is the first frequency number; and
send third physical layer control signaling in a fourth superframe at an operating frequency number, where some or all information bits in the third physical layer control signaling are scrambled by using the first identifier, the operating frequency number is the first frequency number, and the third physical layer control signaling indicates switching of the operating frequency number of the first node to the second frequency number.

In still another possible implementation, the first physical layer control signaling belongs to one of a plurality of pieces of physical layer control signaling, the plurality of pieces of physical layer control signaling further include fourth physical layer control signaling, and a length of the first physical layer control signaling is the same as a bit length of the fourth physical layer control signaling. A function of the first physical layer control signaling is different from a function of the fourth physical layer control signaling.

In a possible design, the communication apparatus 120 is configured to implement the method on a side of the second node in the foregoing communication method.

In a possible implementation of the fourth aspect, a first communication unit 1201 is configured to receive higher layer signaling from a first node, and the higher layer signaling includes a first identifier; and
a second communication unit 1202 is configured to receive first physical layer control signaling at an operating frequency number, where some or all information bits in the first physical layer control signaling are scrambled by using the first identifier, and the operating frequency number is a first frequency number; and
the first physical layer control signaling indicates switching of an operating frequency number of the first node to a second frequency number.

In another possible implementation, the first identifier corresponds to a frequency number switching function.

In still another possible implementation, the first physical layer control signaling includes a function indication field, and the function indication field indicates that the first identifier corresponds to the frequency number switching function.

In still another possible implementation, the some information bits in the first physical layer control signaling include a cyclic redundancy check CRC code of the first physical layer control signaling.

In still another possible implementation, a resource for sending the first physical layer control signaling belongs to a pre-configured physical layer control signaling common resource.

In still another possible implementation, the communication apparatus 120 further includes a processing unit 1203 and a third communication unit 1204;
the processing unit 1203 is further configured to descramble the some or all information bits in the first physical layer control signaling by using the first identifier; and
the third communication unit 1204 is further configured to communicate with the first node at the second frequency number.

It should be understood that when all the information bits in the first physical layer control signaling are scrambled by using the first identifier, the processing unit descrambles all the information bits in the first physical layer control signaling by using the first identifier.

When the some information bits in the first physical layer control signaling are scrambled by using the first identifier, the processing unit descrambles the some information bits in the first physical layer control signaling by using the first identifier.

In still another possible implementation, superframe sequence numbers of a first superframe and a second superframe are consecutive; and the first superframe is a last superframe for transmitting data and/or signaling at the first frequency number before the operating frequency number of the first node is switched from the first frequency number to the second frequency number, and the second superframe is a first superframe for transmitting data and/or signaling at the second frequency number after the operating frequency number of the first node is switched from the first frequency number to the second frequency number.

That is, before and after operating frequency number switching, superframe sequence numbers of superframes are consecutive.

In still another possible implementation, an interval between an end moment of the first superframe and a start moment of the second superframe is N milliseconds, N is an integer, and N≥0.

In still another possible implementation, the first physical layer control signaling includes one or more of the following information: an identifier of the second frequency number, an indication of a frequency number switching moment, a re-access indication, a switching interval indication, or a preamble indication.

In still another possible implementation, the first physical layer control signaling includes the identifier of the second frequency number. The identifier of the second frequency number indicates a destination frequency number for switching, and includes but is not limited to a frequency number sequence number, a frequency number index number, or a channel number.

In still another possible implementation, the first physical layer control signaling includes the indication of the frequency number switching moment. The indication of the switching moment indicates an occasion for switching the operating frequency number.

In a possible manner, the indication of the frequency number switching moment indicates a moment at which the first node starts to switch the operating frequency number, for example, indicates a superframe sequence number of a last superframe used by the first node for transmission at the current operating frequency number, or indicates an offset of a last superframe used by the first node for transmission at the current operating frequency number relative to a superframe for sending the first physical layer control signaling.

In another possible manner, the indication of the frequency number switching moment indicates a start moment at which transmission starts at the second frequency number, for example, indicates a superframe sequence number of a first superframe used by the first node for transmission at the second frequency number, or indicates an offset of a start moment of a first superframe used by the first node for transmission at the second frequency number relative to a start moment of a superframe for sending the first physical layer control signaling.

Optionally, the offset in the foregoing manner may be in a unit of a superframe, in a unit of a millisecond (ms), or in a unit of a microsecond (µs).

In still another possible implementation, the first physical layer control signaling includes the re-access indication. The re-access indication is indication information indicating whether the second node needs to perform re-access.

In some possible cases, the re-access indication indicates the second node not to perform the re-access operation. For example, a communication domain system configuration is not changed or changed as little as possible or only a communication domain system configuration (for example, a random access resource pool configuration or a channel sounding reference signal resource pool configuration) that does not affect scheduling of current transmission is changed during frequency number switching. This avoids re-access of the second node, and avoids invalidation of current scheduling.

In still another possible implementation, the communication apparatus 120 further includes a third communication unit 1204, and the third communication unit 1204 is configured to: perform a re-access operation when the re-access indication is a first value.

In still another possible implementation, when being a second value, the re-access indication indicates the second node to maintain a current access state or not to perform an access operation.

In still another possible implementation, the first physical layer control signaling includes the switching interval indication, and the switching interval indicates a time interval between a first superframe and a second superframe.

Optionally, the switching interval indication may include one or more of the following time intervals:
a time interval between an end moment of the first superframe and a start moment of the second superframe, a time interval between a start moment of the first superframe and the start moment of the second superframe, a time interval between the end moment of the first superframe and an end moment of the second superframe, a time interval between a synchronization signal in the first superframe and a synchronization signal in the second superframe, and the like.

In still another possible implementation, the switching interval indication further indicates whether the first node sends preamble information at the second frequency number.

The communication apparatus 120 may determine, based on the switching interval indication, whether to receive, at the second frequency number, the preamble information from the first node.

In still another possible implementation, the communication apparatus 120 further includes a third communication unit 1204, and the third communication unit 1204 is configured to: when the switching interval indication is greater than a third value, receive, at the second frequency number, the preamble information from the first node.

In still another possible implementation, when being 0, the switching interval indication indicates that the first node does not send the preamble information at the second frequency number; or when being a value greater than 0, the switching interval indication indicates that the first node sends the preamble information at the second frequency number.

The communication apparatus 120 further includes a third communication unit 1204, and the third communication unit 1204 is configured to: when the switching interval indication is a value greater than 0, receive, at the second frequency number, the preamble information from the first node.

In still another possible implementation, the first physical layer control signaling includes the preamble indication, and the preamble indication indicates that the first node sends the preamble information at the second frequency number, or indicates that the first node does not send the preamble information at the second frequency number.

Optionally, the third communication unit 1204 is configured to: when the preamble indication is a fourth value, receive, at the second frequency number, the preamble information from the first node.

In still another possible implementation, when the switching interval indicates whether the preamble information is sent, the first physical layer control signaling does not need to carry an additional preamble indication.

In still another possible implementation, the first identifier may be used in a plurality of frequency number switching processes.

In still another possible implementation, the second communication unit 1202 is further configured to:
receive, at the operating frequency number, second physical layer control signaling from the first node, where the second physical layer control signaling indicates switching of the operating frequency number to a third frequency number, some information bits in the second physical layer control signaling are scrambled by using the first identifier, and the operating frequency number is the second frequency number.

In still another possible implementation, the communication apparatus 120 further includes a fourth communication unit 1205, and the fourth communication unit is configured to send frequency number capability information of the second node to the first node, where the frequency number capability information of the second node indicates a frequency number supported by the second node.

Optionally, the second frequency number belongs to a frequency number supported by the second frequency number.

Optionally, the frequency number capability information is used to determine a switching interval.

In still another possible implementation, the first physical layer control signaling is sent in a broadcast and/or multicast manner.

In still another possible implementation, the communication apparatus 120 does not send feedback indicating whether the first physical layer control signaling is successfully detected.

In still another possible implementation, the second communication unit 1202 is further configured to:
receive the first physical layer control signaling in a third superframe at the operating frequency number, where the operating frequency number is the first frequency number; and
receive third physical layer control signaling in a fourth superframe at an operating frequency number, where some or all information bits in the third physical layer control signaling are scrambled by using the first identifier, the operating frequency number is the first frequency number, and the third physical layer control signaling indicates switching of the operating frequency number of the first node to the second frequency number.

In still another possible implementation, the first physical layer control signaling belongs to one of a plurality of pieces of physical layer control signaling, the plurality of pieces of physical layer control signaling further include fourth physical layer control signaling, and a length of the first physical layer control signaling is the same as a bit length of the fourth physical layer control signaling. A function of the first physical layer control signaling is different from a function of the fourth physical layer control signaling.

In the foregoing implementation, a bit length of the first physical layer control signaling is the same as a length of another type of physical layer control signaling indicating another function. In other words, a bit length of the first physical layer control signaling belongs to an existing bit length.

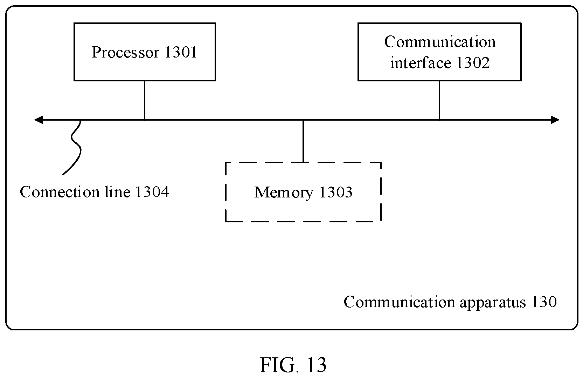

FIG. 13 is a diagram of a structure of a possible communication apparatus 130 according to an embodiment of this application.

The communication apparatus 130 may be an independent device, for example, a node, or may be a component included in the independent device, for example, a chip, a software module, or an integrated circuit. The communication apparatus 130 may include at least one processor 1301 and a communication interface 1302. Optionally, at least one memory 1303 may be included. Further, optionally, a connection line 1304 may be included. The processor 1301, the communication interface 1302, and/or the memory 1303 are/is connected through the connection line 1304, and/or communicate with each other through the connection line 1304, to transfer a control signal and/or a data signal.
(1) The processor 1301 is a module for performing an arithmetic operation and/or a logic operation, and may specifically include one or more of the following modules: a filter, a modem, a power amplifier, a low noise amplifier (low noise amplifier, LNA), a baseband processor, a radio frequency processor, a radio frequency circuit, a central processing unit (central processing unit, CPU), an application processor (application processor, AP), a microcontroller unit (microcontroller unit, MCU), an electronic control unit (electronic control unit, ECU), a graphics processing unit (graphics processing unit, GPU), a microprocessor unit (microprocessor unit, MPU), an application-specific integrated circuit (application-specific integrated Circuit, ASIC), an image signal processor (image signal processor, ISP), a digital signal processor (digital signal processor, DSP), a field programmable gate array (field programmable gate array, FPGA), a complex programmable logic device (complex programmable logic device, CPLD), a coprocessor, or the like.
(2) The communication interface 1302 may be configured to provide information input or output for the at least one processor, or configured to receive a signal sent externally and/or send a signal to the outside.

For example, the communication interface 1302 may include an interface circuit.

For example, the communication interface 1302 may be a wired link interface including an Ethernet cable and the like, or may be a wireless link (Wi-Fi, Bluetooth, universal wireless transmission, an onboard short-range communication technology, another short-range wireless communication technology, or the like) interface.

Optionally, the communication interface 1302 may further include a radio frequency transmitter, an antenna, and the like. When the communication interface 1302 includes an antenna, there may be one or more antennas.

In a possible design, if the communication apparatus 130 is an independent device, the communication interface 1302 may include a receiver and a transmitter. The receiver and the transmitter may be a same component or different components. When the receiver and the transmitter are a same component, the component may be referred to as a transceiver.

In another possible design, if the communication apparatus 130 is a chip or a circuit, the communication interface 1302 may include an input interface and an output interface, and the input interface and the output interface may be a same interface or different interfaces.

Optionally, a function of the communication interface 1302 may be implemented through a transceiver circuit or a dedicated transceiver chip.

(3) The memory 1303 is configured to provide storage space, and the storage space may store data such as an operating system and a computer program. The memory 1303 may be one or a combination of a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), and the like.

Functions and actions of modules or units in the communication apparatus 130 listed above are merely examples for description.

Functional units in the communication apparatus 130 may be configured to implement the foregoing communication method, for example, the communication method shown in FIG. 4, FIG. 9, FIG. 10, or FIG. 11. Herein, detailed descriptions are omitted to avoid repetition.

Optionally, the processor 1301 may be a processor (referred to as a dedicated processor for ease of differentiation) that is specially configured to perform the foregoing method, or may be a processor (referred to as a dedicated processor for ease of differentiation) that invokes a computer program to perform the foregoing method. Optionally, the at least one processor may further include both a dedicated processor and a general-purpose processor.

Optionally, when the communication apparatus 130 includes the at least one memory 1303, if the processor 1301 invokes a computer program to implement the foregoing communication method, the computer program may be stored in the memory 1303.

An embodiment of this application further provides a chip. The chip includes a logic circuit and a communication interface. The communication interface is configured to receive a signal or send a signal, and the logic circuit is configured to receive a signal or send a signal through the communication interface. The chip is configured to implement the foregoing communication method, for example, the method in FIG. 4, FIG. 9, FIG. 10, or FIG. 11.

An embodiment of this application further provides a computer-readable storage medium. The computer-readable storage medium stores instructions. When the instructions are run on at least one processor (or communication apparatus), the foregoing communication method, for example, the method shown in FIG. 4, FIG. 9, FIG. 10, or FIG. 11, is implemented.

An embodiment of this application further provides a computer program product. The computer program product includes computer instructions, and the computing instructions are used to implement the foregoing communication method, for example, the method in FIG. 4, FIG. 9, FIG. 10, or FIG. 11.

An embodiment of this application further provides a terminal. The terminal includes the foregoing communication apparatus 120 or communication apparatus 130.

In a possible implementation, the terminal includes a first node and/or a second node. The first node includes the foregoing communication apparatus 120 or communication apparatus 130, and the second terminal includes the foregoing communication apparatus 120 or communication apparatus 130.

The terminal may be a smart terminal or a transportation vehicle like a vehicle, an uncrewed aerial vehicle, or a robot.

It should be noted that in embodiments of this application, the word "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In embodiments of this application, "at least one" means one or more, and "a plurality of" means two or more. "At least one of the following items (pieces)" or a similar expression thereof refers to any combination of these items, including any combination of singular items (pieces) or plural items (pieces).

For example, at least one of a, b, or c may indicate: a, b, c, (a and b), (a and c), (b and c), or (a, b, and c), where a, b, and c may be singular or plural. The term "and/or" describes an association between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects.

In addition, unless otherwise stated, ordinal numbers such as "first" and "second" in embodiments of this application are for differentiation between a plurality of objects, but are not intended to limit an order, a time sequence, priorities, or importance of the plurality of objects.

For example, first physical layer control signaling and second physical layer control signaling are merely intended to facilitate description of different signaling, but do not indicate differences in structures, sending manners, importance degrees, and the like between the first physical layer control signaling and the second physical layer control signaling. In some embodiments, the first physical layer control signaling and the second physical layer control signaling may alternatively be physical layer control signaling with same data content.

For another example, a first superframe, a second superframe, a third superframe, and a fourth superframe are merely intended to facilitate description of superframes in different implementations, but do not indicate differences in structures, sending manners, importance degrees, and the like. In some possible scenarios, the fourth superframe and the second superframe may be a same superframe.

According to the context, the term "when" used in the foregoing embodiments may be interpreted as a meaning of "if", "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

## Claims

1. A communication method, comprising:
sending, by a first node, higher layer signaling, wherein the higher layer signaling comprises a first identifier; and
sending, by the first node, first physical layer control signaling at an operating frequency number, wherein some or all information bits in the first physical layer control signaling are scrambled by using the first identifier, and the operating frequency number is a first frequency number; and
the first physical layer control signaling indicates switching of the operating frequency number of the first node to a second frequency number.

2. The method according to claim 1, wherein the first physical layer control signaling comprises a function indication field, and the function indication field indicates that the first identifier corresponds to a frequency number switching function.

3. The method according to claim 1 or 2, wherein the first identifier corresponds to the frequency number switching function.

4. The method according to any one of claims 1 to 3, wherein the some information bits comprise a cyclic redundancy check CRC code of the first physical layer control signaling.

5. The method according to any one of claims 1 to 4, wherein a resource carrying the first physical layer control signaling belongs to a pre-configured physical layer control signaling common resource.

6. The method according to any one of claims 1 to 5, wherein after the sending first physical layer control signaling, the method further comprises:
communicating, by the first node, with at least one second node at the second frequency number.

7. The method according to any one of claims 1 to 6, wherein
superframe sequence numbers of a first superframe and a second superframe are consecutive; and
the first superframe is a last superframe for transmitting data and/or signaling at the first frequency number before the operating frequency number of the first node is switched from the first frequency number to the second frequency number, and the second superframe is a first superframe for transmitting data and/or signaling at the second frequency number after the operating frequency number of the first node is switched from the first frequency number to the second frequency number.

8. The method according to any one of claims 1 to 6, wherein the first physical layer control signaling comprises a superframe sequence number continuity indication, and the superframe sequence number continuity indication indicates whether it is ensured that superframe sequence numbers of a first superframe and a first superframe are consecutive; and
the first superframe is a last superframe for transmitting data and/or signaling at the first frequency number before the operating frequency number of the first node is switched from the first frequency number to the second frequency number, and the second superframe is a first superframe for transmitting data and/or signaling at the second frequency number after the operating frequency number of the first node is switched from the first frequency number to the second frequency number.

9. The method according to claim 7 or 8, wherein an interval between an end moment of the first superframe and a start moment of the second superframe is N milliseconds, N is an integer, and N≥0.

10. The method according to any one of claims 7 to 9, wherein the first physical layer control signaling comprises a switching interval indication, and the switching interval indication indicates a time interval between the first superframe and the second superframe.

11. The method according to claim 10, wherein the method further comprises:
when the switching interval indication is greater than a third value, sending, by the first node, preamble information to the at least one second node at the second frequency number.

12. The method according to any one of claims 1 to 10, wherein the first physical layer control signaling comprises one or more of the following information:
an identifier of the second frequency number, an indication of a frequency number switching moment, a re-access indication, or a preamble indication.

13. The method according to claim 12, wherein the first physical layer control signaling comprises the re-access indication; and
when being a first value, the re-access indication indicates the at least one second node to perform an access operation at the second frequency number; or
when being a second value, the re-access indication indicates the at least one second node to maintain a current access state or not to perform an access operation.

14. The method according to claim 12 or 13, wherein the first physical layer control signaling comprises the preamble indication, and the preamble indication indicates that the first node sends the preamble information at the second frequency number, or indicates that the first node does not send the preamble information at the second frequency number.

15. The method according to any one of claims 1 to 14, wherein the method further comprises:
sending, by the first node, second physical layer control signaling at an operating frequency number, wherein the second physical layer control signaling indicates switching of the operating frequency number to a third frequency number, some or all information bits in the second physical layer control signaling are scrambled by using the first identifier, and the operating frequency number is the second frequency number.

16. The method according to any one of claims 1 to 15, wherein the method further comprises:
receiving, by the first node, frequency number capability information of the at least one second node, wherein the frequency number capability information of the at least one second node indicates a frequency number supported by the at least one second node.

17. The method according to any one of claims 1 to 16, wherein the first physical layer control signaling is sent in a broadcast and/or multicast manner.

18. The method according to any one of claims 1 to 17, wherein the sending, by the first node, first physical layer control signaling at an operating frequency number comprises:
sending, by the first node, the first physical layer control signaling in a third superframe at the operating frequency number, wherein the operating frequency number is the first frequency number; and
the method further comprises:
sending, by the first node, third physical layer control signaling in a fourth superframe at an operating frequency number, wherein some or all information bits in the third physical layer control signaling are scrambled by using the first identifier, the operating frequency number is the first frequency number, and the third physical layer control signaling indicates switching of the operating frequency number of the first node to the second frequency number.

19. A communication method, comprising:
receiving, by a second node, higher layer signaling from a first node, wherein the higher layer signaling comprises a first identifier; and
receiving, by the second node, first physical layer control signaling at an operating frequency number, wherein
some or all information bits in the first physical layer control signaling are scrambled by using the first identifier, and the operating frequency number is a first frequency number; and
the first physical layer control signaling indicates switching of an operating frequency number of the first node to a second frequency number.

20. The method according to claim 19, wherein the first physical layer control signaling comprises a function indication field, and the function indication field indicates that the first identifier corresponds to a frequency number switching function.

21. The method according to claim 19 or 20, wherein the first identifier corresponds to the frequency number switching function.

22. The method according to any one of claims 19 to 21, wherein the some information bits comprise a cyclic redundancy check CRC code of the first physical layer control signaling.

23. The method according to any one of claims 19 to 22, wherein a resource for sending the first physical layer control signaling belongs to a pre-configured physical layer control signaling common resource.

24. The method according to any one of claims 19 to 23, wherein the method further comprises:
descrambling, by the second node, the some or all information bits in the first physical layer control signaling by using the first identifier; and
communicating, by the second node, with the first node at the second frequency number.

25. The method according to any one of claims 19 to 24, wherein superframe sequence numbers of a first superframe and a second superframe are consecutive; and
the first superframe is a last superframe for transmitting data and/or signaling at the first frequency number before the operating frequency number of the first node is switched from the first frequency number to the second frequency number, and the second superframe is a first superframe for transmitting data and/or signaling at the second frequency number after the operating frequency number of the first node is switched from the first frequency number to the second frequency number.

26. The method according to any one of claims 19 to 24, wherein the first physical layer control signaling comprises a superframe sequence number continuity indication, and the superframe sequence number continuity indication indicates whether it is ensured that superframe sequence numbers of a first superframe and a first superframe are consecutive; and
the first superframe is a last superframe for transmitting data and/or signaling at the first frequency number before the operating frequency number of the first node is switched from the first frequency number to the second frequency number, and the second superframe is a first superframe for transmitting data and/or signaling at the second frequency number after the operating frequency number of the first node is switched from the first frequency number to the second frequency number.

27. The method according to claim 25 or 26, wherein an interval between an end moment of the first superframe and a start moment of the second superframe is N milliseconds, N is an integer, and N≥0.

28. The method according to any one of claims 25 to 27, wherein the first physical layer control signaling comprises a switching interval indication, and the switching interval indication indicates a time interval between the first superframe and the second superframe.

29. The method according to claim 28, wherein the method further comprises:
when the switching interval indication is greater than a third value, receiving, by the second node at the second frequency number, preamble information from the first node.

30. The method according to any one of claims 19 to 28, wherein the first physical layer control signaling comprises one or more of the following information:
an identifier of the second frequency number, an indication of a frequency number switching moment, a re-access indication, the switching interval indication, or a preamble indication.

31. The method according to claim 30, wherein the first physical layer control signaling comprises the re-access indication; and
when being a first value, the re-access indication indicates the second node to perform an access operation at the second frequency number; or
when being a second value, the re-access indication indicates the second node to maintain a current access state or not to perform an access operation.

32. The method according to claim 30 or 31, wherein the first physical layer control signaling comprises the preamble indication, and the preamble indication indicates that the first node sends the preamble information at the second frequency number, or indicates that the first node does not send the preamble information at the second frequency number.

33. The method according to any one of claims 19 to 32, wherein the method further comprises:
receiving, by the second node at an operating frequency number, second physical layer control signaling from the first node, wherein the second physical layer control signaling indicates switching of the operating frequency number to a third frequency number, some information bits in the second physical layer control signaling are scrambled by using the first identifier, and the operating frequency number is the second frequency number.

34. The method according to any one of claims 19 to 33, wherein the method further comprises:
sending, by the second node, frequency number capability information of the second node to the first node, wherein the frequency number capability information of the second node indicates a frequency number supported by the second node.

35. A communication apparatus, wherein the communication apparatus comprises a first communication unit and a second communication unit;
the first communication unit is configured to send higher layer signaling, and the higher layer signaling comprises a first identifier;
the second communication unit is configured to send first physical layer control signaling at an operating frequency number, wherein some or all information bits in the first physical layer control signaling are scrambled by using the first identifier, and the operating frequency number is a first frequency number; and
the first physical layer control signaling indicates switching of an operating frequency number of a first node to a second frequency number.

36. A communication apparatus, wherein the communication apparatus comprises a first communication unit and a second communication unit;
the first communication unit is configured to receive higher layer signaling from a first node, and the higher layer signaling comprises a first identifier;
the second communication unit is configured to receive first physical layer control signaling at an operating frequency number, wherein some or all information bits in the first physical layer control signaling are scrambled by using the first identifier, and the operating frequency number is a first frequency number; and
the first physical layer control signaling indicates switching of an operating frequency number of the first node to a second frequency number.

37. A communication apparatus, wherein the communication apparatus comprises a processor and a communication interface;
the communication interface is configured to receive and/or send a signal, and/or the communication interface is configured to provide input/output for the processor; and
when the processor invokes a computer program or instructions in a memory, the communication apparatus implements the method according to any one of claims 1 to 18, or the communication apparatus implements the method according to any one of claims 19 to 34.

38. A communication apparatus, comprising a logic circuit and a communication interface, wherein
the communication interface is configured to receive a signal or send a signal; and
the logic circuit is configured to receive a signal or send a signal through the communication interface, so that the method according to any one of claims 1 to 18 is implemented, or the method according to any one of claims 19 to 34 is implemented.

39. A terminal device, comprising the communication apparatus according to any one of claims 35 to 38.

40. A computer-readable storage medium, comprising:
the computer-readable storage medium is configured to store instructions or a computer program; and when the instructions or the computer program is executed, the method according to any one of claims 1 to 18 is implemented, or the method according to any one of claims 19 to 34 is implemented.

41. A computer program product, comprising instructions or a computer program, wherein
when the instructions or the computer program is executed, the method according to any one of claims 1 to 18 is implemented, or the method according to any one of claims 19 to 34 is implemented.
